# EUROPÄISCHE PATENTANMELDUNG

(11) **EP 2 169 331 A2**
(43) Veröffentlichungstag der Anmeldung: **31.03.2010**
(21) Anmeldenummer: 08167978.9
(22) Anmeldetag: 30.10.2008
(51) Int. Cl.: F24J 2/05, F24J 2/12, F24F 5/00, F25B 27/00, H01L 31/058

(54) **Solar-Kälteeinheit**

(30) Priorität: 30.09.2008 EP 08165550
(71) Anmelder: Aeteba GmbH, 83059 Kolbermoor (DE)
(72) Erfinder: Sporer, Elmar, 82538 Geretsried (DE)
(74) Vertreter: Zech, Stefan Markus

(57) **Zusammenfassung**

Die Erfindung betritt einen Kollektivkollektor (10) zur gleichzeitigen Erzeugung von elektrischem Strom und thermischer Wärme umfassend eine Lichteintrittsscheibe (13), welche in einem Betriebszustand von Sonnenlicht durchstahlt wird und den Kollektivkollektor (10) in einem Betriebszustand wenigstens zu einer sonnenzugewandten Seite hin begrenzt, wenigstens eine in einer ersten Fläche (F1) angeordneten Photovoltaikzelle (11), wenigstens eine in einer zweiten Fläche (F2) angeordneten Lichtabsorberschicht (14), wenigstens eine mit einem Fluid gefüllten Rohrleitung (15); wobei die erste Fläche (F1) in einem Betriebszustand des Kollektivkollektors (10) einer sonnenzugewandten Seite zugewandt ist, die erste und die zweite Fläche (F1 und F2) in vollflächigem Kontakt miteinander angeordnet sind, und die wenigstens eine Photovoltaikzelle (11) einen Durchlass von durch die Lichteintrittsscheibe (13) gestrahltem Sonnenlicht in Einfallsrichtung auf die zweite Fläche (F2) erlaubt, und wobei ferner die zweite Fläche (F2) mit der wenigstens einen Rohrleitung (15) in thermischem Kontakt ist, so dass bei einem absorbtionsbedingten Erwärmen der Lichtabsorberschicht (14) das Fluid in der Rohrleitung (15) einen Wärmeübertrag erfährt.

## Beschreibung

Die vorliegende Erfindung betrifft einen solar betriebenen Kollektivkollektor zur gleichzeitigen Erzeugung von elektrischem Strom und thermischer Wärme sowie eine Solar-Kälteeinheit und ein Verfahren zur gleichzeitigen Bereitstellung von Wärme, Kälte und Strom mittels einer Solar-Kälteeinheit.

Kollektivkollektoren, welche ausgebildet sind neben der Erzeugung von elektrischer Energie durch den Photovoltaikeffekt in Photovoltaikzellen gleichzeitig auch die solare Energie zur Erzeugung von Wärme in einem geeignet ausgebildeten Wärmetauscher (Solarthermievorrichtung) zu nutzen, wurde in den letzten Jahren zunehmend technisch weiterentwickelt. Kollektivkollektoren zeichnen sich insbesondere durch ihre Eigenschaft aus, den Gesamtwirkungsgrad eines rein mit Photovoltaikzellen versehenen Kollektors durch Aufnahme einer geeignet ausgebildeten Solarthermievorrichtung zu verbessern und folglich die Gesamtwirtschaftlichkeit des Kollektors zu erhöhen.

Hierbei steht bei den meisten aus dem Stande der Technik bekannten Kollektivkollektoren die Optimierung der Menge der erzeugten elektrischen Energie im Vordergrund, wobei jedoch das relative Verhältnis von erzeugter elektrischer zu erzeugter thermischer Energie weitgehend unbestimmt ist.

So ist etwa aus der DE 39 23 821 A1 ein Kollektor zur Gewinnung von Energie aus der Strahlung der Sonne bekannt, welcher aus einem von einem Medium durchflossenen Wärmetauscher und zusätzlich aus einem photovoltaischen Kollektor besteht. Zur gleichzeitigen Erzeugung von elektrischer und thermischer Energie sind hierbei die thermischen Kollektoren aus einem für sichtbares und UV-Licht durchlässigen Material gefertigt, so dass der infrarote Spektralbereich der einzig absorbierte Bereich des elektromagnetischen Spektrums des Sonnenlichts ist. Die Wahl von für sichtbares und UV-Licht durchlässigem Material erlaubt, diese beiden Spektralbereiche für die Erzeugung elektrischer Energie mittels des photovoltaischen Teils des Kollektors zu nutzen, welcher in Bezug auf die Einfallsrichtung des Sonnenlichts dem thermischen Kollektor nachgeschaltet ist.

Aufgrund der wellenlängenspezifischen Wahl des Materials zur Herstellung des thermischen Kollektors steht folglich ein nur sehr beschränkter Spektralbereich der Sonnenlichtenergie für die Erzeugung thermischer Wärme in dem Kollektivkollektor zur Verfügung. Zur Beeinflussung des relativen Anteils an elektrischer wie auch thermischer Energie wird in einer Weiterbildung der in der DE 39 23 821 A1 beschriebenen Erfindung vorgeschlagen, das in dem thermischen Kollektor zum Wärmeaustausch verwendete Medium durch Einsatz von Farbstoffen entsprechend an die Nutzungsbedürfnisse anzupassen. Insbesondere für die Erreichung hoher thermischer Wirkungsgrade bedarf es folglich des Einsatzes größerer Mengen an Farbstoffen, welche in der Handhabung mitunter eine Gefahrenquelle für den menschlichen Benutzer darstellen können. Weiterhin ist die genaue Einstellung des Kollektivkollektors hinsichtlich des Verhältnisses der erzeugten elektrischen Energie im Vergleich zur erzeugten thermischen Energie relativ schwierig, da bei Zugabe von zu viel Farbstoff nicht ausreichend Licht auf die Photovoltaikzellen gelangt, um genügend elektrische Energie zu erzeugen. Ferner ändert sich der Wirkungsgrad der thermischen Energieerzeugung, da mit zunehmendem Alter der Farbstoffe, diese ausbleichen und nicht mehr zur Erhöhung des thermischen Wirkungsgrades zur Verfügung stehen.

Insbesondere zur langfristigen Verwendung mit Vorrichtungen, die einen hohen Wärmezutrag aus einem solarbetriebenen Wärmetauscher bedürfen, sind derartige aus dem Stand der Technik bekannte Kollektivkollektoren nicht geeignet. Ferner ist durch den hohen Wartungsaufwand, welcher sich durch die Verwendung von Farbstoff in dem Medium ergibt, der aus der DE 39 23 821 A1 bekannte Kollektivkollektor ungeeignet für Anwendungen, die die Übertragung einer hohen Wärmeleistung bedürfen. Ebenfalls ist dieser Kollektivkollektor ungeeignet zum Einsatz an entlegenen Orten, die nur unter großem Aufwand gewartet werden können.

Gemäß dieser Nachteile stellt sich die technische Aufgabe, einen Kollektivkollektor vorzuschlagen, welcher einerseits eine leichte Handhabung sowie einen optimierten thermischen Wirkungsgrad aufweist, um Anlagen mit einem hohen Wärmebedarf versorgen zu können.

Die Aufgabe wird durch einen Kollektivkollektor zur gleichzeitigen Erzeugung von elektrischem Strom und thermischer Wärme gemäß dem Patentanspruch 1 gelöst.

Insbesondere wird die Aufgabe durch einen Kollektivkollektor zur gleichzeitigen Erzeugung von elektrischem Strom und thermischer Wärme gelöst, welcher folgende Bauteile umfasst: eine Lichteintrittsscheibe, welche in einem Betriebszustand von Sonnenlicht durchstrahlt wird und den Kollektivkollektor in einem Betriebszustand wenigstens zu einer sonnenzugewandten Seite hin begrenzt; wenigstens eine in einer ersten Fläche angeordneten Photovoltaikzelle; wenigstens eine in einer zweiten Fläche angeordneten Lichtabsorberschicht; wenigstens eine mit einem Fluid gefüllte Rohrleitung; wobei die erste Fläche in einem Betriebszustand des Kollektors einer sonnenzugewandten Seite zugewandt ist, die erste und die zweite Fläche in vollflächigem Kontakt miteinander angeordnet sind, und die wenigstens eine Photovoltaikzelle einen Durchlass von durch die Lichteintrittsscheibe gestrahltem Sonnenlicht in Einfallsrichtung auf die zweite Fläche erlaubt, und wobei ferner die zweite Fläche mit der wenigstens einen Rohrleitung in thermischem Kontakt ist, so dass bei einem absorptionsbedingten Erwärmen der Lichtabsorberschicht das Fluid in der Rohrleitung einen Wärmeübertrag erfährt.

Der Grundgedanke der gleichzeitigen Nutzung wenigstens einer Photovoltaikzelle zur elektrischen Stromerzeugung sowie einer Solarthermievorrichtung, umfassend wenigstens eine Lichtabsorberschicht sowie eine mit einem Fluid (Wärmeaustauschmedium) gefüllte Rohrleitung, zur Erzeugung von thermischer Energie liegt in der vorliegenden Erfindung darin, dass die thermische Energiegewinnung deutlich im Vordergrund steht, wobei eine nicht optimierte, hinsichtlich des möglichen Wirkungsgrades deutlich schlechtere elektrische Energiegewinnung akzeptiert wird. Damit widerspricht die vorliegende Lehre dem Prinzip der Leistungssteigerung der elektrischen Stromerzeugung durch die Optimierung der Arbeitsbedingungen für die elektrische Stromerzeugung, wie sie für die meisten Kollektivkollektoren aus dem Stande der Technik bekannt ist. Der vorliegende Kollektivkollektor ist jedoch derart ausgebildet, eine möglichst große Ausbeute thermischer Energie in einem bestimmten Temperaturbereich von bis zu ca. 100°C, insbesondere von 70 °C bis 95 °C, zu gewährleisten, wobei gleichzeitig noch in wirtschaftlichem Maße elektrische Energie mittels der umfassten Photovoltaikzellen erzeugt wird. Zudem zeichnet sich der erfindungsgemäße Kollektivkollektor durch einen sehr einfachen und überaus wartungsfreundlichen Aufbau auf, welcher insbesondere für den Betrieb von Anlagen mit einem großen Wärmebedarf ausgebildet ist.

Der direkte Kontakt zwischen den für die Stromerzeugung verantwortlichen Photovoltaikzellen und der zur thermischen Wärmegewinnung benutzten Solarthermievorrichtung, wenigstens bestehend aus einer Lichtabsorberschicht sowie wenigstens einer mit Fluid gefüllten Rohrleitung, widerspricht hierbei der konventionellen Lehre, die Photovoltaikzellen nicht mit heißen Oberflächen in Kontakt zu bringen, um den Wirkungsgrad der elektrischen Energieerzeugung nicht zu vermindern. Gerade bei hohen Temperaturen verlieren Photovoltaikzellen nämlich signifikant an Fähigkeit zur elektrischen Energieerzeugung, weshalb in herkömmlichen Kollektivkollektoren stets darauf geachtet wird, die verwendeten Photovoltaikzellen thermisch gegen warme Oberflächen zu isolieren. Diese thermische Isolation hingegen erfordert weitere konstruktive Bauteile sowie Herstellungsschritte, welche die Kosten für die Herstellung solcher Photovoltaikzellen deutlich erhöhen.

Der vorliegend vorgeschlagene Kollektivkollektor vermindert hingegen den konstruktiven Aufwand dadurch überaus deutlich, dass die wenigstens eine zur elektrischen Energieerzeugung verwendete Photovoltaikzelle direkt auf der von der Solarthermievorrichtung umfassten Lichtabsorberschicht aufgebracht ist. Der direkte Kontakt zwischen beiden Komponenten bewirkt zwar hierbei eine deutliche Verminderung der Fähigkeit der Photovoltaikzelle zur Stromerzeugung, erhöht jedoch die Ausbeute an thermischer Energie, welche bei vorliegendem Kollektivkollektor im Vordergrund steht.

Damit eignet sich der Kollektivkollektor insbesondere zur Verwendung in Verbindung mit Kältemaschinen, welche zur thermischen Erzeugung von Kälte (negativer Wärme) eines hohen Zutrags an Wärmeenergie bedürfen. Gleichzeitig benötigen derartige Kältemaschinen auch elektrische Energie, welche für den Betrieb von fluidtechnischen Pump-, Stell- und Regelelementen notwendig ist. Folglich sind Kältemaschinen, wie sie aus dem Stande der Technik bekannt sind, stets auf einen örtlichen Betrieb in der Nähe eines Zugangs zu einem elektrischen Versorgungsnetz beschränkt. Dies hingegen erlaubt den Betrieb lediglich an einer relativ geringen Anzahl an Orten, die eine gesicherte elektrische Energieversorgung bereit stellen können. Insbesondere sind damit auch alle Orte in Entwicklungsländern ausgeschlossen, welche keine geregelte Energieversorgung sichern können.

Demzufolge stellt sich als weiteres Problem, den Betrieb einer Kältemaschine auch an einem Betriebsort zu gewährleisten, welcher keinen Zugang zu einem externen elektrischen Versorgungsnetz bzw. einer externen elektrischen Versorgung hat.

Vorliegend wird vorgeschlagen, dieses Problem mittels einer Solar-Kälteeinheit zu lösen, welche wenigstens folgende Komponenten umfasst: wenigstens ein Solarkollektorsystem, welches zur Erzeugung von elektrischem Strom wenigstens eine Photovoltaikzelle und zur gleichzeitigen Erzeugung von Wärme eine Solarthermievorrichtung aufweist, insbesondere wenigstens einen Kollektivkollektor gemäß der vorherigen Beschreibung vorsieht; wenigstens eine Kältemaschine, die als Adsorptions- und/oder Absorptionskältemaschine ausgeführt ist, und welche über ein Fluidleitungssystem mit der Solarthermievorrichtung in fluidtechnischem Kontakt steht; eine elektrische Steuereinheit zur elektrischen und/oder zur fluidtechnischen Regelung regelungsbedürftiger Komponenten der Solar-Kälteeinheit; wobei die elektrische Energie zum Betrieb der Steuereinheit und der Kältemaschine entweder in direkter oder in indirekter Form durch die wenigstens eine Photovoltaikzelle bereitgestellt wird und die Solar-Kälteeinheit folglich autark von einer externen Stromversorgung ist.

Ferner wird vorliegend eine Solar-Kälteeinheit vorgeschlagen, welche wenigstens folgende Komponenten umfasst: wenigstens ein Solarkollektorsystem, welches zur Erzeugung von elektrischem Strom wenigstens eine Photovoltaikzelle und zur gleichzeitigen Erzeugung von Wärme eine Solarthermievorrichtung aufweist, insbesondere wenigstens einen Kollektivkollektor gemäß der vorher beschriebenen Art vorsieht; wenigstens eine Kältemaschine, die als Adsorptions- und/oder Absorptionskältemaschine ausgeführt ist, und welche über ein Fluidleitungssystem mit der Solarthermievorrichtung in fluidtechnischem Kontakt steht; eine elektrische Steuereinheit zur elektrischen und/oder zur fluidtechnischen Regelung regelungsbedürftiger Komponenten der Solar-Kälteeinheit; wobei die Solar-Kälteeinheit weiter wenigstens eine transportable Anordnungsvorrichtung aufweist, welche als Container oder Schiffcontainer ausgeführt ist, und in welcher die Komponenten der Solar-Kälteeinheit, welche zum Betrieb nicht dem Sonnenlicht ausgesetzt werden müssen, angeordnet sind.

Weiterhin wird vorliegend ein Verfahren zur gleichzeitigen Bereitstellung von Wärme, Kälte und Strom mittels einer Solar-Kälteeinheit vorgeschlagen, insbesondere mittels einer Solar-Kälteeinheit der vorhergehend dargestellten Art, welches folgende Schritte umfasst: gleichzeitiges Erzeugen von Wärme und Strom mittels wenigstens eines SolarKollektorsystems, welches zur Erzeugung von elektrischem Strom wenigstens eine Photovoltaikzelle vorsieht und welcher zur Erzeugung von Wärme eine Solarthermievorrichtung vorsieht, insbesondere mittels wenigstens eines Kollektivkollektors gemäß der vorher beschriebenen Art; Erzeugen von Kälte mittels einer Kältemaschine, die als Adsorptions- und/oder Absorptionskältemaschine ausgeführt ist, und welche über ein Fluidleitungssystem mit der Solarthermievorrichtung des Solarkollektorsystems in fluidtechnischem Kontakt steht; wobei die elektrische Energie zum Betrieb der Kältemaschine entweder in direkter oder in indirekter Form durch die wenigstens eine Photovoltaikzelle des wenigstens einen Solarkollektorsystems bereitgestellt wird und die Solar-Kälteeinheit folglich autark von einer externen Stromversorgung ist.

Die vorab beschriebenen Solar-Kälteeinheiten bedürfen sowohl eines Zuflusses an Wärme als auch elektrischer Energie, welche beide ausschließlich solartechnisch erzeugt werden können. Insbesondere können elektrische wie thermische Energie mittels eines Kollektivkollektors der vorab beschriebenen Art erzeugt werden. Damit kann der Betrieb der erfindungsgemäßen Solar-Kälteeinheit unabhängig von einem Zugang zu einer externen elektrischen Energieversorgung sein. Folglich kann die Solar-Kälteeinheit auch in Gebieten verwendet werden, welche energietechnisch noch nicht oder nur unzureichend erschlossen worden sind. Zudem erlauben die vorgeschlagenen Solar-Kälteeinheiten eine völlig CO₂-neutrale Erzeugung von Kälte, Wärme und gleichzeitig Strom.

In einer ersten Ausführungsform des Kollektivkollektors zur gleichzeitigen Erzeugung von elektrischem Strom und thermischer Wärme ist vorgesehen, dass der Kollektivkollektor auf wenigstens einer in einem Betriebszustand sonnenabgewandten Seite, insbesondere auch auf Seiten, welche in einem Betriebszustand die wenigstens eine Photovoltaikzelle sowie die Lichtabsorberschicht seitlich begrenzen, eine oder mehrere Lagen an Isoliermittel, vorzugsweise eine oder mehrere Lagen an Mineralwolle, aufweist. Hierdurch wird der Kollektivkollektor effektiv vor Abstrahlung von Wärmestrahlung nach außen und damit vor einem ungewünschten Energieverlust geschützt. Ausführungsgemäß wird damit der Wirkungsgrad der thermischen Wärmeproduktion des Kollektivkollektors erhöht.

Obwohl die zusätzliche Isolation durch Vorsehen wenigstens einer Lage an Isoliermittel weiter die Effizienz der Photovoltaikzellen zur elektrischen Energieerzeugung vermindert, kann diese Verminderung teilweise dadurch relativiert werden, dass das in der wenigstens einen Rohrleitung enthaltene Fluid die in der Solarthermievorrichtung erzeugte Wärme ausreichend schnell durch einen geeignet schnellen Austauschfluss abführt. Diese Abführung von Wärme in ausreichendem Maß ist vor allem bei der Verwendung des Kollektivkollektors in Verbindung mit der vorgeschlagenen Solar-Kälteeinheit gewährleistet, da die in von der Solar-Kälteeinheit umfasste Kältemaschine eines hohen Zutrags an Wärme bedarf, und damit auch eine hohe Abführung an Wärme aus dem Fluidleitungssystem, in welchem sich das Fluid, welches mit der Solarthermievorrichtung in fluidtechnischem Kontakt steht, befindet, gewährleistet ist. Demzufolge kann etwa auch bei Betrieb der Solar-Kälteeinheit in Verbindung mit dem Kollektivkollektor bei hochsommerlichen Umgebungsverhältnissen eine Überhitzung der Photovoltaikzellen verhindert werden, da bei hohen Umgebungstemperaturen nicht nur die solare Einstrahlungsleistung sondern auch die von einem Nutzer abgefragte Kühlleistung durch die Solar-Kälteeinheit erhöht sind. Die verstärkt nachgefragte Kühlleistung kann nur durch einen erhöhten Bedarf an Wärmeübertrag aus dem Kollektivkollektor gedeckt werden. Die Aufheizung der Photovoltaikzellen in dem Kollektivkollektor kann demnach auf etwa 100° Celsius beschränkt werden und beträgt folglich in etwa vergleichbaren Betriebstemperaturen bei herkömmlichen Photovoltaikmodulen, die keine spezielle Wärmeanpassung vorsehen. Die folglich mit dem Kollektivkollektor erzielbare Energieausbeute der Solarstrahlung pro Fläche (der solare Gesamtwirkungsgrad des Kollektivkollektors) wird in Verbindung mit der Benutzung der vorab beschriebenen Solar-Kälteeinheit deutlich über das Maß aus dem Stand der Technik bekannter Kollektivkollektoren erhöht.

In einer weiteren Ausführungsform des erfindungsgemäßen Kollektivkollektors zur gleichzeitigen Erzeugung von elektrischem Strom und thermischer Wärme ist die Lichteintrittsscheibe von einer Glasröhre umfasst, in welcher die wenigstens eine Photovoltaikzelle, die wenigstens eine Lichtabsorptionsschicht und die wenigstens eine mit einem Fluid gefüllte Rohrleitung angeordnet sind. Aufgrund der geometrischen Voraussetzungen liegen die Betriebstemperaturen im Betriebszustand derartiger Glasröhren-Kollektivkollektoren weit über den Betriebstemperaturen vergleichbarer Kollektivkollektoren mit flächiger Geometrie. Demzufolge erscheint die Verwendung von ausführungsgemäßen Glasröhren-Kollektivkollektoren nur sinnvoll, wenn eine ausreichende Wärmeabfuhr durch das in der wenigstens einen Rohrleitung enthaltene Fluid gewährleistet werden kann. Dies ist bei der Benutzung des Kollektivkollektors in Verbindung mit der vorab beschriebenen Solar-Kälteeinheit der Fall. Aufgrund der Glasröhrengeometrie ist der Kollektivkollektor ferner modular aufbaubar, wobei zu Wartungs- und zu Reparaturzwecken lediglich einzelne Glasröhrenmodule gewartet bzw. ausgetauscht werden müssen, um den Betriebszustand einer etwa zeitweise defekten Anlage wiederherzustellen.

In einer bevorzugten Ausführungsform der vorliegenden Erfindung ist in einem Betriebszustand des Kollektivkollektors wenigstens ein vorbestimmter innerer Teilbereich der Glasröhre evakuiert. Durch die Evakuierung der gesamten Glasröhre bzw. bestimmter innerer Teilbereiche kann folglich eine Reduktion des konvektiven Wärmeverlustes erreicht werden, wodurch der Wirkungsgrad der thermischen Energieerzeugung durch die Solarthermievorrichtung deutlich verbessert wird.

In einer weiterführenden Ausführungsform des erfindungsgemäßen Kollektivkollektors sind die erste und zweite Fläche in einem Querschnitt senkrecht zur Längserstreckung der Glasröhre als geschlossene, insbesondere ellipsoidartige Kurven dargestellt, wobei der Querschnitt wenigstens einer mit einem Fluid gefüllten Rohrleitung innerhalb der beiden geschlossenen Kurven angeordnet ist. Ausführungsgcmäß vereinfacht sich die technische Darstellung der beiden Flächen, welche lediglich in einfacher und kompakter Weise miteinander verbunden werden können. Zudem sind Kollektivkollektoren dieser Geometrie weniger sensitiv hinsichtlich einer Ausrichtung zum Sonnenstand.

In einer anderen Ausführungsform weist der Kollektivkollektor weiterhin wenigstens ein Reflexionselement auf, insbesondere wenigstens ein parabolförmiges Reflexionselement, welches eine Bündelung von auf die wenigstens eine Photovoltaikzelle und/oder wenigstens eine Lichtabsorberschicht auftreffendem Sonnenlicht bewirkt. Ausführungsgemäß kann folglich der Wirkungsgrad, insbesondere der thermische Wirkungsgrad des Kollektivkollektors, weiter erhöht werden, indem auch Sonnenlicht, welches ansonsten für die Nutzung durch den Kollektivkollektor verloren ginge, diesem wieder durch geeignete Reflexion zugeführt wird.

Weiterhin sei an dieser Stelle auch darauf hingewiesen, dass die Anordnung der Bauteile in den Röhren-Kollektivkollektoren entsprechend dem Sydney-Prinzip, dem Heat-Pipe-Prinzip oder auch als direkt durchströmte Vakuumröhre ausgeführt sein kann.

In einer ersten bevorzugten Ausführungsform der Solar-Kälteeinheit weist die Solar-Kälteeinheit wenigstens eine transportable Anordnungsvorrichtung auf, welche insbesondere als Container oder Schiffscontainer ausgeführt ist, zur Anordnung von Komponenten der Solar-Kälteeinheit, welche zum Betrieb nicht dem Sonnenlicht ausgesetzt werden müssen. Die Anordnung der Komponenten in einem Container oder Schiffscontainer kann hierbei bereits werksseitig erfolgen. Die Container können sämtliche zum Betrieb erforderliche Komponenten und Baugruppen der Solar-Kälteeinheit bereits vor Auslieferung aus dem Werk umfassen. Nach der werkseitigen Fertigung bzw. Bestückung der Container bzw. Schiffscontainer müssen diese lediglich an ihre Bestimmungsorte transportiert werden, um dort ohne weiteres in Betrieb genommen werden zu können. Die Inbetriebnahme vor Ort kann sich folglich auf eine einfache Sichtkontrolle von Transportschäden, einen Anschluss der nötigen Zufuhr- und Abfuhrleitungen, ein Befüllen von Fluid enthaltenden Komponenten und ein Einschalten der Anlage beschränken. Typische in Containern oder Schiffscontainern angeordnete Solarkälteeinheiten weisen eine Gesamtleistungsabgabe von ca. 10 kW bis ca. 200 kW auf.

Alternativ kann eine ausführungsgemäße Solar-Kälteeinheit auch in einzelnen Baugruppen modular aufgebaut sein. Hierbei können einzelne Anordnungsvorrichtungen als Module vorgesehen sein, welche bei einer Festinstallation der Solar-Kälteeinheit, etwa in einem Gebäude, lediglich miteinander verschaltet und verbunden werden müssen. Die Anordnungsvorrichtungen können etwa in einer vorbestimmten Weise ausgeformte, stabile Grundrahmen sein, auf welche einzelne Komponenten der Solar-Kälteeinheit montiert sind. Um eine Solar-Kälteeinheit in Betrieb zu nehmen, müssen die einzelnen Module lediglich in Bezug zueinander aufgestellt, aneinander befestigt und miteinander verschaltet werden. Hiezu können auch Schnellverbindersysteme für Rohrverbindungen zum Einsatz kommen.

In einer weiteren Ausführungsform der Erfindung umfasst das Fluidleitungssystem geeignete Passstücke mit Flanschen und/oder Schnellrohrverbindungsstücke, die erlauben, nach der Montage der Solar-Kälteeinheit das Fluidleitungssystem schnell und fehlerfrei aufzubauen.

Weiterhin können die elektrischen Verbindungskabel der Solar-Kälteeinheit kodierte Stecker mit entsprechenden Anschlussbuchsen umfassen, die bei der Inbetriebnahme erlauben, die Verkabelung aller Komponenten verwechslungssicher vorzunehmen.

Die Voranordnung einzelner Komponenten der Solar-Kälteeinheit mithilfe der wenigstens einen transportablen Anordnungsvorrichtung kann hierbei so erfolgen, dass zur Aufstellung der Solar-Kälteeinheit am Bestimmungsort kein Fachpersonal und/oder nur wenig Werkzeug und kein Spezialwerkzeug benötigt wird. Insbesondere sind weder Schweißnoch Lötarbeiten erforderlich.

Die Solar-Kälteeinheit kann sich zudem dadurch auszeichnen, dass die wenigstens eine transportable Anordnungsvorrichtung mechanische Mittel zur Transporterleichterung umfasst, die als Materialausnehmungen, Transportlaschen und/oder als Kranösen ausgeführt sind. Hierdurch wird eine leichte und sichere Handhabung der Anordnungsvorrichtung, insbesondere bei dem Transport durch Gabelstapler, LKWs und Schiffe gewährleistet.

Eine modulare Bauweise der Solar-Kälteeinheit mittels der Verwendung von transportablen Anordnungsvorrichtungen erleichtert auch den Test einer gesamten Solar-Kälteeinheit vor deren Auslieferung. Hierzu wird die Solar-Kälteeinheit in vorbestimmter Anordnung am Herstellungsort in Betrieb genommen und Belastungs- und Leistungstests unterzogen. Ist die Funktionstüchtigkeit der Anlage gesichert, kann die Anlage als Ganzes bzw. können einzelne Module unmittelbar verpackt und ausgeliefert werden. Ein funktionsgefährdendes Einsetzen einzelner Komponenten beim Aufstellen der Solar-Kälteeinheit am Bestimmungsort kann folglich entfallen, da lediglich modulare Bausteine der Solar-Kälteeinheit miteinander in Beziehung gesetzt werden müssen bzw. kein Aufbau erforderlich ist.

Die Anordnung der Solar-Kälteeinheit bzw. ihrer Komponenten in einer transportablen Anordnungsvorrichtung erleichtert zudem die Sicherstellung der Qualität der Anlage, da diese nur kurz vor dem Verpacken und der Auslieferung im Herstellungswerk entsprechenden Funktions- sowie Leistungstests unterzogen wird. Die erzielten Leistungswerte können in geeigneter Weise dokumentiert werden, wodurch eine Abnahme der Gesamtanlage, etwa durch technische Prüfer, bereits werksseitig erfolgen kann. Dementsprechend kann die Gesamtanlage etwa einem zur Zertifizierung dienenden Prüfsystem durch einen unabhängigen Sachverständigen unterzogen werden, ohne dass diese nachher nach Aufstellung an dem Bestimmungsort zu erfolgen hätte.

In einer weiterhin bevorzugten Ausführungsform der erfindungsgemäßen Solar-Kälteeinheit weist die Solarkälteeinheit eine elektrische Schnittstelle zu einem externen Stromnetz auf, um die durch das wenigstens eine Solarkollektorsystem erzeugte und von der Solar-Kälteeinheit nicht benötigte Menge an elektrischer Energie, in das externe Stromnetz einzuspeisen. Bei Betrieb einer ausführungsgemäßen Solar-Kälteeinheit, insbesondere mithilfe eines vorab beschriebenen Kollektivkollektors, werden im Betrieb der Solar-Kälteeinheit bei sommerlichen Verhältnissen in mittleren und niederen Breiten lediglich etwa 20 % des photovoltaisch erzeugten Stroms durch die von der Solar-Kälteeinheit umfassten Kältemaschine zur Kältegewinnung benötigt. Etwa 80 % der erzeugten elektrischen Energie stehen anderen elektrischen Komponenten zur Benutzung zur Verfügung. Ein Großteil dieser nicht durch die Kältemaschine verwendeten elektrischen Energie kann folglich in ein externes Stromnetz eingespeist werden, und steht zur allgemeinen Stromnutzung zur Verfügung. Eine Einspeisung von überschüssiger elektrischer Energie kann durch die zentralen Stromnetzbetreiber vergütet werden und reduziert infolgedessen die Betriebskosten für die ausführungsgemäße Solar-Kälteeinheit.

In einer weiteren Ausführungsform der erfindungsgemäßen Solar-Kälteeinheit weist diese eine Speichereinrichtung als weitere Komponente auf, um die durch das wenigstens eine Solarkollektorsystem erzeugte und von der Solar-Kälteeinheit nicht benötigter Menge an elektrischer Energie in elektrischer oder chemischer Form zu speichern, so dass sie zu einem späteren Zeitpunkt in elektrischer Form wieder der Solar-Kälteeinheit zur Verfügung gestellt werden kann. Ausführungsgemäß kann bei Erzeugung eines Überschusses an elektrischer Energie auf die Einspeisung in ein externes Stromnetz zur Nutzung dieses Überschusses verzichtet werden, sondern der Energieüberschuss kann der Solar-Kälteeinheit wieder bei Bedarf zugeführt werden. So kann beispielsweise die Solar-Kälteeinheit weiterhin betrieben werden, auch wenn die Lichtbedingungen zur Erzeugung von elektrischer Energie mithilfe des Solarkollektorsystems nicht mehr ausreichend sind. Insbesondere kann der Betrieb der Solar-Kälteeinheit bei Bewölkung auch dann aufrecht erhalten werden, wenn aufgrund der verminderten Lichteinstrahlung nicht ausreichend elektrische Energie durch das Solarkollektorsystem oder den Kollektivkollektor produziert werden kann. Durch die Speicherung und zeitversetzte erneute Zuführung der elektrischen Energie kann ferner auch bei Stromausfällen oder technischen Problemen in der externen Stromversorgung ein kontinuierlicher Betrieb der Solar-Kälteeinheit gewährleistet werden. Die bei geringerer Sonneneinstrahlung in dem wenigstens einen Solarkollektorsystem bzw. dem wenigstens einen Kollektivkollektor auftretenden Temperaturen bewirken zudem einen effizienteren Wärmeübertrag auf das Fluid der Solarthermievorrichtung sowie eine effizientere Stromerzeugung mittels der wenigstens einen Photovoltaikzelle.

In einer weiterführenden Ausführungsform der Solar-Kälteeinheit zeichnet sich diese dadurch aus, dass die Speichereinrichtung wenigstens ein Batterieelement umfasst. Demzufolge kann die Speicherung der überschüssigen elektrischen Energie, welche von der Solar-Kälteeinheit nicht benötigt wird, in elektrischer Form erfolgen, welche bei Bedarf unmittelbar wieder als solche der Speichereinrichtung entzogen werden kann.

In einer alternativen Ausführungsform umfasst die Speichereinrichtung eine Aufspaltungseinrichtung zur Aufspaltung von Wasser in Wasserstoff und Sauerstoff, sowie wenigstens ein Vorratsbehältnis zur Bevorratung von Wasserstoff und eine Brennstoffzelle zur Stromerzeugung mithilfe des in dem Vorratsbehältnis bevorrateten Wasserstoffs. Gemäß dieser Ausführungsform wird die von der Solar-Kälteeinheit nicht benötigte Menge an elektrischer Energie in chemischer Form gespeichert, die sich vorliegend durch ihre Umweltfreundlichkeit besonders auszeichnet. Zur erneuten Stromerzeugung kommt eine Brennstoffzelle zum Einsatz, die alternativ in geeigneter Weise auch durch nicht durch die Solar-Kälteeinheit hergestellten Wasserstoff versorgt werden kann. Folglich kann gewährleistet werden, dass die Solar-Kälteeinheit bei ungenügenden Lichtverhältnissen, das heißt bei geringer Sonnenlichteinstrahlung oder auch nachts, mit ausreichend elektrischer Energie versorgt werden kann.

In einer weiterführenden Ausführungsform der erfindungsgemäßen Solar-Kälteeinheit ist die Kältemaschine derart ausgeführt, dass sie ein in dem wenigstens einen Solarkollektorsystem oder Kollektivkollektor auf eine erste Temperatur erwärmtes Fluid über das Fluidleitungssystem als Eingangsfluid zum Betrieb aufnimmt, und als Ausgangsfluid das Fluid oder ein anderes Fluid mit einer zweiten im Vergleich zur ersten Temperatur niedrigeren Temperatur ausgibt, wobei insbesondere die erste Temperatur zwischen 50°C und 150°C, und insbesondere zwischen 70°C und 95°C liegt und die zweite Temperatur zwischen 20°C und 50°C, insbesondere zwischen 40°C und 45°C liegt. Demgemäß eignen sich insbesondere die vorab beschriebenen Kollektivkollektoren zur Versorgung der Kältemaschine mit erwärmten Eingangsfluid, da der thermische Wirkungsgrad von Kollektivkollektoren für eine Ausbeute im Temperaturbereich bis ca. 100°C besonders hoch ist. Das als Ausgangsfluid der Kältemaschine ausgegebene Fluid einer zweiten Temperatur lässt sich insbesondere geeignet zur Schwimmbadbeheizung oder Brauchwasservorwärmung nutzen.

In einer bevorzugten Ausführungsform weist die Solar-Kälteeinheit weiterhin eine Hochtemperatur-Wärmepumpe oder eine Adsorptions-/Absorptions-Wärmepumpe auf, die von der Kältemaschine abgegebene Wärme als Wärmetransfer zum Betrieb aufnimmt und die wenigstens teilweise mit durch das wenigstens eine Solarkollektorsystem bzw. den Kollektivkollektor bereitgestellter elektrischer Energie oder mit externer Energie versorgt wird, um eine Wärmeabgabe bereitzustellen, welche einen größeren Wärmeinhalt aufweist als der abgegebene Wärmetransfer der Kältemaschine. Die Verwendung einer Hochtemperatur-Wärmepumpe oder einer Adsorptions-/Absorptions-Wärmepumpe erlaubt folglich die von der Kältemaschine abgegebene Wärme, welche typischerweise in einem Fluss eines Fluids einer Temperatur von bis zu etwa 45°C enthalten ist, noch zu erhöhen, so dass eine Abgabe eines Fluids mit einer Temperatur von bis zu 100°C erreicht werden kann. Diese kalorische Aufbereitung erlaubt insbesondere industrielle Prozesse mit ausreichender Wärme bzw. mit einem Fluidfluss einer ausreichenden Temperatur zu versorgen. Hierbei werden in industriellen Prozessen vor allem Fluidflüsse mit einer Temperatur von 60°C bis 100°C nachgefragt. Durch die Nutzung der von der Kältemaschine abgegebenen Wärme als Wärmetransfer lässt sich in energetisch sparsamer Weise ein höheres Temerpaturniveau erzeugen.

So kann beispielweise das in einem Hotel benötigte Warmwasser von 60 °C mit einem relativ günstigen Wirkungsgrad hergestellt werden, da der relativ geringe Temperaturunterschied des von der Kältemaschine abgegebenen Wassers und des von der Hochtemperatur-Wärmepumpe oder der Adsorptions-/Absorptions-Wärmepumpe abgegebenen Wassers einen kalorisch besonders günstigen Übertrag an Wärme erlaubt. Hierbei kann ein COP (Quotienten aus eingesetzter elektrischer Leistung zur nutzbaren Wärme) von etwa 4 erreicht werden, d.h. es müssen nur 25% elektrische Leistung eingesetzt werden, um Wasser von 60°C zu erhalten, welches 100% der zur Verfügung stehenden Wärmeleitung entspricht.

Ein weiterer Vorteil der Nutzung der Kältemaschine als Wärmequelle liegt auch darin, dass auch ohne direkte Nutzung der Wärmeabgabe eine geeignete Rückkühlung der Solar-Kälteeinheit bzw. der Kältemaschine erfolgt, wodurch keine separate energieintensive Rückkühlung erforderlich ist. Zudem lässt sich durch die Sicherstellung von relativ geringen Temperaturen von in die Kältemaschine eintretenden Kühlwassers der Wirkungsgrad der Kältemaschine noch zusätzlich steigern.

Die Solar-Kälteeinheit zeichnet sich in einer weiteren Ausführungsform dadurch aus, dass sie einen kombinierten elektrischen und thermischen Leistungsausstoß zwischen 1 kW und 1000 kW, insbesondere zwischen 5 kW und 500 kW und vorzugsweise zwischen 10 kW und 200 kW aufweist. Dementsprechend eigenen sich die ausführungsgemäßen Solar-Kälteeinheiten zur gleichzeitigen Kälte-, Wärme und Stromversorgung von ganzen Wohnungseinheiten, Hotels, oder kleine Unternehmen.

In einer anderen Ausführungsform weist die Solar-Kälteeinheit weiterhin eine Kompressionskältemaschine auf, die insbesondere zum Betrieb mittels der durch das wenigstens eine Solarkollektorsystem in direkter oder indirekter Form bereitgestellten Energie vorgesehen ist. Ausführungsgemäß vermag die Solar-Kälteeinheit auch dann Kälte zur Verfügung zu stellen, wenn die Kältemaschine beispielsweise ausfallsbedingt nicht zur Verfügung steht. Zudem kann die ausführungsgemäße Solar-Kälteeinheit auch bei nicht ausreichenden Lichtverhältnissen tagsüber oder während der Nachtstunden durch Versorgung einer nach dem Wärmepumpenprinzip arbeitenden Kompressionskältemaschine mit elektrischer Energie, beispielsweise aus der eigenen Speichereinrichtung bzw. einem externen Stromnetz, die Kälteproduktion weiterhin aufrechterhalten.

In einer weiteren Ausführungsform der Solar-Kälteeinheit steuert die elektrische Steuereinheit die Kältemaschine derart, dass diese lediglich bei genügender Einstrahlung von Sonnenlicht auf das Solarkollektorsystem bzw. den Kollektivkollektor zur Herstellung einer ausreichenden Menge an thermischer Wärme diese auch zur Kälteproduktion eingesetzt wird. Ausführungsgemäß kann der wirtschaftlichen Kälteerzeugung folglich immer Vorrang gegeben werden. Durch eine geeignete Regelung des Betriebs der Kältemaschine und gleichzeitig der Kompressionskältemaschine kann stets die vorrangige Erzeugung von Kälte gewährleistet werden. Weiterhin kann durch ein intelligentes Speichermanagement durch die elektrische Steuereinheit die Laufzeit der Solarkälteeinheit verlängert sowie deren Betriebsbedingungen optimiert werden. Die Regelung kann zur Effizienzverbesserung auch die momentane Außentemperatur als Parameter und die zukünftig zu erwartende Kühlleistung berücksichtigen.

In einer weiterhin bevorzugten Ausführungsform der erfindungsgemäßen Solar-Kälteeinheit kann die elektrische Steuereinheit über wenigstens eine Schnittstelle über ein externes Netzwerk, insbesondere über das Internet, bedient werden. Eine geeignete Software, die mit der elektrischen Steuereinheit kommuniziert, kann zudem erlauben, alle zur Regelung der Solar-Kälteeinheit notwendigen Bedienungsbefehle an die elektrische Steuereinheit zu übermittelt. Ferner können alle durch Sensoren aufgenommene Betriebsparameter von einem entfernten Bediener abgefragt und manipuliert werden. Derartige Parameter umfassen insbesondere Temperatur- und Durchflusswerte. Hierdurch lässt sich jeder Betriebszustand der Solar-Kälteeinheit zeitlich nachvollziehen, wodurch Fehlfunktionen und Ausfälle leichter erkannt und ohne kostspielige Wartungsarbeiten benutzerseitig beseitigt werden können. Weiterhin können Betriebsoptimierungen durch entsprechende Anpassungen der Komponenten der Solar-Kälteeinheit aus der Ferne vorgenommen werden. Eine Alternative zur netzwerkgesteuerten Steuereinheit ist eine satellitengestützte Steuereinheit.

Weitere Ausführungsformen der Erfindung ergeben sich aus den Unteransprüchen.

Nachfolgend wird die Erfindung anhand von Ausführungsbeispielen beschrieben, die anhand der Abbildungen näher erläutert werden.

### Hierbei zeigen:

- Fig. 1: eine seitliche Schnittansicht einer ersten Ausführungsform des erfindungsgemäßen Kollektivkollektors;
- Fig. 2: eine seitliche Schnittansicht durch eine weitere Ausführungsform des erfindungsgemäßen Kollektivkollektors;
- Fig. 3a: eine seitliche Schnittansicht durch eine weitere Ausführungsform des erfindungsgemäßen Kollektivkollektors;
- Fig. 3b: eine seitliche Schnittansicht durch eine weitere Ausführungsform des erfindungsgemäßen Kollektivkollektors;
- Fig. 3c: eine seitliche Schnittansicht durch eine weitere Ausführungsform des erfindungsgemäßen Kollektivkollektors;
- Fig. 3d: eine seitliche Schnittansicht durch eine weitere Ausführungsform des erfindungsgemäßen Kollektivkollektors;
- Fig. 3e: eine seitliche Schnittansicht durch eine weitere Ausführungsform des erfindungsgemäßen Kollektivkollektors;
- Fig. 4: eine Schemadarstellung einer Solar-Kälteeinheit aus dem Stande der Technik;
- Fig. 5: eine Schemadarstellung einer Solar-Kälteeinheit gemäß einer ersten Ausführungsform der erfindungsgemäßen Solar-Kälteeinheit;
- Fig. 6a: zeigt eine Schemadarstellung einer weiteren Ausführungsform der erfindungsgemäßen Solar-Kälteeinheit;
- Fig. 6b: zeigt eine Schemadarstellung einer weiteren Ausführungsform der erfindungsgemäßen Solar-Kälteeinheit;
- Fig. 7a: zeigt eine Schemadarstellung einer weiteren Ausführungsform der erfindungsgemäßen Solar-Kälteeinheit;
- Fig. 7b: zeigt eine Schemadarstellung einer weiteren Ausführungsform der erfindungsgemäßen Solar-Kälteeinheit;
- Fig. 8: zeigt eine Schemadarstellung einer weiteren Ausführungsform der erfindungsgemäßen Solar-Kälteeinheit;
- Fig. 9: zeigt eine Schemadarstellung einer weiteren Ausführungsform der erfindungsgemäßen Solar-Kälteeinheit;
- Fig. 10: eine seitliche Schnittansicht durch einen eine weitere Ausführungsform der erfindungsgemäßen Solar-Kälteeinheit umfassenden Container; und
- Fig. 11: eine weitere, seitlich versetzte seitliche Schnittansicht durch den in Fig. 10 dargestellten Container.

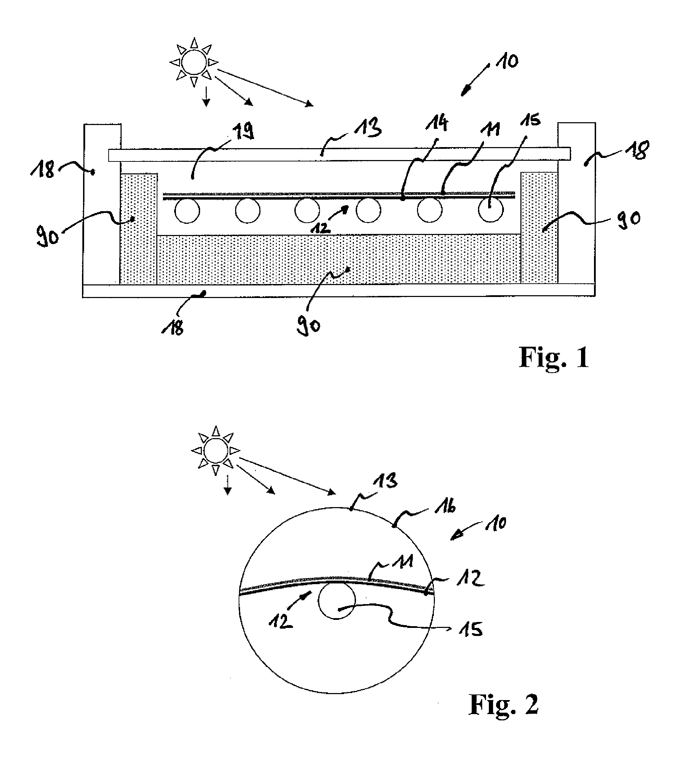

Fig. 1 zeigt eine seitliche Schnittansicht durch eine erste Ausführungsform des erfindungsgemäßen Kollektivkollektors 10, welcher mit einer planen Lichteintrittsscheibe 13 der Sonne zugewandt ist. Der Kollektivkollektor 10 wird seitlich von den beiden Begrenzungselementen 18 begrenzt, welche derart ausgeformt sind, dass sie die Lichteintrittsscheibe 13 geeignet haltern bzw. aufnehmen. Auf der der Sonne abgewandten Seite des Kollektivkollektors 10 ist typischerweise zum Abschluss ein weiteres Begrenzungselement 18 vorgesehen.

Ausführungsgemäß umfasst der Kollektivkollektor 10 wenigstens eine Photovoltaikzelle 11, welche zum Empfang von durch die Lichteintrittsscheibe 13 hindurch gestrahlten Sonnenlicht ebenfalls der Sonne zugewandt ist, und im Wesentlichen parallel zur Lichteintrittsscheibe 13 angeordnet ist. Die wenigstens eine Photovoltaikzelle 11 ist auf einer planen Lichtabsorberschicht 14 angeordnet, welche ihrerseits mit einer Mehrzahl an Rohrleitungen 15, vorliegend mit insgesamt sechs dargestellten Rohrleitungen 15, in Kontakt ist. Die Fläche der wenigstens einen Photovoltaikzelle bzw. die Fläche der Lichtabsorberschicht definieren entsprechend eine erste Fläche F1 und eine zweite Fläche F2. Zur Isolierung der Photovoltaikzelle 11 sowie der die Lichtabsorberschicht 14 und Rohrleitung 15 umfassenden Solarthermievorrichtung 12 sind im Inneren des Kollektivkollektors 10 wenigstens eine Lage aus Isoliermittel 90 angeordnet, welche in Bezug auf die Rohrleitungen 15 auf der sonnenabgewandten Seite angeordnet sind, bzw. die wenigstens eine Photovoltaikzelle 11 sowie die Solarthermievorrichtung 12 seitlich begrenzen. Alternativ können die Rohrleitungen auch von der wenigstens einen Lage an Isoliermittel 90 umfasst werden.

Die Lichteintrittsscheibe 13, welche beispielsweise aus Solarglas einer geeigneten Dicke ausgeführt ist, insbesondere aus Solarglas von 4 mm Dicke, erlaubt bei Sonnenlichtverhältnissen den Durchtritt von Sonnenstrahlen ohne das Lichtspektrum in den für die Herstellung von elektrischer Energie bzw. von Wärmeenergie relevanten spektralen Bereichen signifikant zu absorbieren. Nach Durchtritt durch die Lichteintrittsscheibe 13 durchstrahlt das Sonnenlicht einen Luftraum 19, welcher in einer alternativen Ausführungsform des vorliegenden Kollektivkollektors 10 auch wenigstens teilweise evakuiert sein kann. In einem Betriebszustand gewährleistet die Lichteintrittsscheibe 13 fernerhin eine Unterdrückung von Wärmeverlusten durch Konvektion bzw. durch Abstrahlung von Wärmestrahlung. Um die interne Konvektion und folglich die internen Temperaturschwankungen gering zu halten kann auch vorgesehen sein, dass die wenigstens eine Photovoltaikzelle 11 direkt unterhalb der Glasabdeckung angebracht ist.

Nach Durchstrahlung des Luftraumes 19 trifft das Sonnenlicht auf die wenigstens eine Photovoltaikzelle 11, in welcher vor allem das sichtbare und das UV-Sonnenlicht über den Photovoltaikeffekt elektrischen Strom erzeugt. Die wenigstens eine Photovoltaikzelle erlaubt hierbei aufgrund ihrer optischen Eigenschaften den Durchtritt von für die elektrische Stromerzeugung weniger geeignete Sonnenstrahlung, welche nachfolgend auf die Lichtabsorberschicht 14 treffen. Das optische Verhalten der Photovoltaikzelle 11 kann hierbei durch die Schichtdicke sowie durch eine geeignete Auswahl der Zusammensetzung gewährleistet werden. Typischerweise wird für die wenigstens eine Photovoltaikzelle eine auf Siliziumtechnologie basierende Photovoltaikzelle verwendet.

Gemäß der Darstellung in Fig. 1 ist die wenigstens eine Photovoltaikzelle 11 auf der Lichtabsorberschicht 14 aufgebracht. Eine in der Zeichnung dargestellte geringe Beabstandung beider Schichten dient lediglich zur besseren Darstellung dieser und ist in einer realen Ausführungsform nicht vorhanden. Das durch die Photovoltaikzelle 11 hindurch strahlende Sonnenlicht wird auf der Lichtabsorberschicht 14 der Solarthermievorrichtung 12 wenigstens teilweise in Wärme umgewandelt, welche über direkte bzw. indirekte Wärmeleitung an die Rohrleitungen 15 weiter übertragen wird. Typischerweise besteht die Lichtabsorberschicht 14 zur Maximierung der Wärmeausbeute aus Kupfer oder Aluminium. Die Rohrleitungen 15, welche mit der Lichtabsorberschicht 14 in direktem Kontakt stehen, sind zur geeigneten Wärmeübertragung an ein in den Rohrleitungen 15 enthaltenes Fluid (vorliegend nicht bezeichnet) durch besonders dünnwandige Rohrwandungen gekennzeichnet. Als besonders geeignet weisen sich Harfenrohre aus, die einen lediglich im Vergleich zur Gesamtgröße des Kollektivkollektors 10 sehr geringen Querschnitt haben, insbesondere einen Querschnitt von 6 mm. Bei Aufrechterhaltung eines Austauschflusses des in den Rohrleitungen 15 enthaltenen Fluids kann die in der Lichtabsorberschicht 14 erzeugte Wärme auf geeignete Weise abgeführt werden, wodurch auch eine Kühlung der Lichtabsorberschicht und damit der Photovoltaikzelle 11 erreicht wird.

Die zur Vermeidung von zu großen Wärmeverlusten verwendeten Isoliermittel 90 sind als zur Wärmeisolierung geeignete Isoliermittel ausgeführt, insbesondere als Lagen von Mineralwolle, die sich durch ihre gute Wärmedämmeigenschaften auszeichnet. Typische Dicken dieser Lagen an Mineralwolle betragen beispielsweise 60 mm auf der sonnenabgewandten Seite. Die Lagen an Isoliermittel 90 können hierbei mit den Begrenzungselementen 18 verbunden sein, welche als Holz- oder Aluminiumbauteile ausgeführt sein können.

Durch die Kontaktierung der wenigstens einen Photovoltaikzelle 11 mit der Lichtabsorberschicht 14 wird eine gleichzeitige Erzeugung von elektrischer Energie sowie Wärmeenergie ermöglicht. Um die Effizienz der elektrischen Energieerzeugung zu verbessern, kann durch Einstellen eines geeigneten Flusses des in den Rohrleitungen 15 beinhalteten Fluids sichergestellt werden, dass eine ausreichende Kühlleistung zur Kühlung der wenigstens einen Photovoltaikzelle 11 erfolgt. Insbesondere bei Versorgung von Vorrichtungen die eines großen Wärmeübertrags durch das in den Rohrleitungen 15 umfasste Fluid bedürfen, kann eine vorteilhafte Kühlung der wenigstens einen Photovoltaikzelle 11 erreicht werden. Demzufolge kann auch bei Betrieb unter hochsommerlichen Temperaturen eine Überhitzung des Kollektivkollektors 11 ausgeschlossen werden, unter gleichzeitiger Aufrechterhaltung der Erzeugung von ausreichender elektrischer Energie. Insbesondere bei Verwendung des Kollektivkollektors 10 in Verbindung mit einer erfindungsgemäßen solaren Kälteeinheit ist eine ausreichende Abfuhr an Wärme aus dem Kollektivkollektor 10 gewährleistet. Da bei hohen Temperaturen für gewöhnlich auch eine hohe Kühlleistung durch die Solare-Kälteeinheit gefordert wird, passt sich ein System aus Kollektivkollektor 10 sowie solarer Kälteeinheit stets auch den Umgebungsbedingungen an und verhindert ein Aufheizen der wenigstens einen Photovoltaikzelle 11 auf Temperaturen, welche eine wirtschaftliche Stromerzeugung nicht mehr erlauben. Insbesondere wird eine Erhitzung auf ca. 100°C beschränkt.

Fig. 2 zeigt eine weitere Ausführungsform des erfindungsgemäßen Kollektivkollektors 10 in einer seitlichen Schnittansicht. Hierbei umfasst der ausführungsgemäße Kollektivkollektor 10 wiederum wenigstens eine Photovoltaikzelle 11, welche mit einer Lichtabsorberschicht 14 einer Solarthermievorrichtung 12 direkt in Kontakt ist. Die Lichtabsorberschicht 14 ist ihrerseits mit einer Rohrleitung 15 in direktem Kontakt, welche ein vorliegend nicht weiter bezeichnetes Fluid zum Wärmeaustausch umfasst. In einer geeigneten Ausführungsform ist das von der Rohrleitung 15 umfasste Fluid unter Unterdruck stehendes Wasser. Gemäß der dargestellten Ausführungsform erfolgt der Wärmeentzug aus dem Kollektivkollektor gemäß dem Heat-Pipe-Prinzip.

Im Gegensatz zur in Fig. 1 dargestellten Ausführungsform wird der in Fig. 2 dargestellte Kollektivkollektor 10 von einer Glasröhre nach außen begrenzt. Zur Reduzierung von Konvektionsverlusten ist die vorliegende Glasröhre 16 evakuiert. Die Glasröhre 16 umfasst somit auch eine Lichteintrittsscheibe 13, durch welche Sonnenlicht in den Kollektivkollektor zur Wärmegewinnung und zur Stromerzeugung gestrahlt wird.

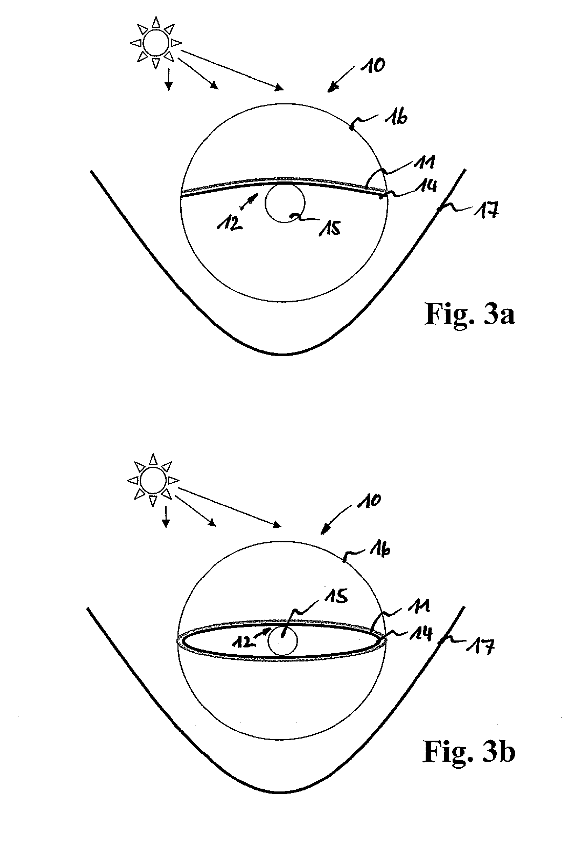

Fig. 3a zeigt eine weitere Ausführungsform des erfindungsgemäßen Kollektivkollektors 10 in einer seitlichen Schnittansicht. Der dargestellte Kollektivkollektor 10 entspricht hierbei der in Fig. 2 dargestellten Ausführungsform, ist jedoch um ein externes Reflexionselement 17 erweitert. Das Reflexionselement 17 ist vorliegend als parabolischer Spiegel ausgeführt, welcher erlaubt, nicht direkt auf den Kollektivkollektor 10 auftreffende Sonnenstrahlung bzw. von diesem wieder abgestrahlte ungenutzte Strahlung zur Gewinnung von elektrischer Energie wie thermischer Energie wieder dem Kollektivkollektor 10 zuzuführen. Hierbei kann die Orientierung des Reflexionselements 17 derart eingestellt sein, dass eine Bündelung der Strahlung auf den Kollektivkollektor 10 hin erfolgt.

Fig. 3b zeigt eine seitliche Schnittansicht einer weiteren Ausführungsform des erfindungsgemäßen Kollektivkollektors 10, wobei im Vergleich zu der in Fig. 3a dargestellten Ausführungsform die wenigstens eine Photovoltaikzelle 11 zusammen mit der Lichtabsorberschicht 14 nicht als einlagige Flächen oder Schichten dargestellt sind, sondern als eine im Querschnitt geschlossene, möglicherweise ellipsoidartige, Kurve.

Vor allem bei Darstellung der wenigstens einen Photovoltaikzelle 11 als Photovoltaikzellenbeschichtung auf der Lichtabsorberschicht 14 weist eine solche Schicht herstellungstechnische Vorteile auf. Zudem erlaubt die vorliegende Ausführungsform eine größere Nutzung der Sonnenenergie, da das durch das Reflexionselement 17 auf die Glasröhre 16 zurückgestrahlte Sonnenlicht auch auf der der Sonne abgewandten Seite des Kollektivkollektors 10 zur Erzeugung von elektrischem Strom und thermischer Wärme vorteilhaft nutzbar ist. Folglich ist der nach dem Heat-Pipe-Prinzip betreibbare Kollektivkollektor 10 in Fig. 3b durch einen im Vergleich zu dem Kollektivkollektor 10 in Fig. 3a höheren Wirkungsgrad gekennzeichnet. Als weiterhin vorteilhaft erweist sich die Symmetrie der Glasröhre 16 sowie der darin enthaltenen Komponenten, da hierdurch eine exakte Orientierung des Kollektivkollektors 10 in Relation zum Stand der Sonne und zur Veränderung des Sonnenstandes im Laufe eines Tages weniger wichtig ist als bei der Ausführungsform gemäß Fig. 3a.

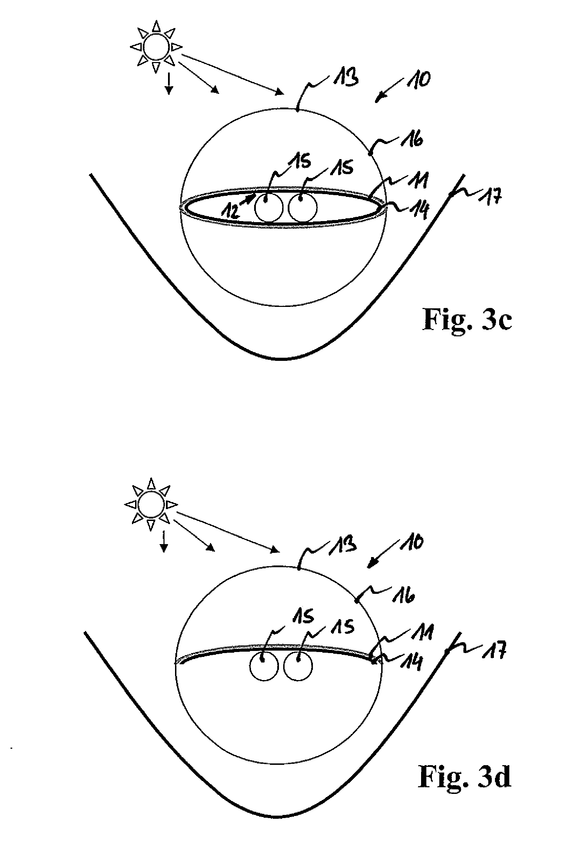

Fig. 3c zeigt eine weitere Ausführungsform des erfindungsgemäßen Kollektivkollektors 10 in einer seitlichen Schnittansicht. Anders als in dem in Fig. 3b dargestellten Kollektivkollektor 10 umfasst der vorliegende Kollektivkollektor 10 zwei parallel verlaufende Rohrleitungen 15, welche ein Fluid (nicht gezeigt) zum Wärmeaustausch umfassen. Gemäß der vorliegenden Ausführungsform wird einerseits durch das Fluid in den beiden Rohrleitungen 15 vergleichsweise größere Menge an thermischer Energie aus dem System des Kollektivkollektors 10 entfernt und andererseits aufgrund der höheren Kühlleistung durch die beiden Rohrleitungen 15 eine höhere Ausbeute an elektrischer Energie durch den in der wenigstens einen Photovoltaikzelle 11 stattfindenden Photovoltaikeffekt gewährleistet. In einer alternativen Ausführungsform, ist es auch denkbar, die beiden Rohrleitungen 15 durch jede weitere mögliche Anzahl an Rohrleitungen 15 zu ersetzen. Insbesondere ist es auch möglich, anstelle von Rohrleitungen 15, das Fluid in einer geeigneten Leitungsvorrichtung, welche direkt mit der Lichtabsorberschicht 14 versehen ist, aufzunehmen.

Fig. 3d zeigt eine seitliche Schnittansicht durch eine weitere Ausführungsform des erfindungsgemäßen Kollektivkollektors 10. Hierbei entspricht der dargestellte Kollektivkollektor 10 weitgehend dem in Fig. 3a dargestellten Kollektivkollektor 10, wobei dieser anstelle mit nur einer Rohrleitung 15 nun mit zwei Rohrleitungen 15 versehen ist. Hierbei ist auch darauf hinzuweisen, dass die beiden Rohrleitungen 15 typischerweise zur Verbesserung des Wärmeübertrags zwischen der Lichtabsorberschicht 14 und den beiden Rohrleitungen 15 aus Kupfer bzw. einem anderen Material mit guten Wärmeleiteigenschaften bestehen.

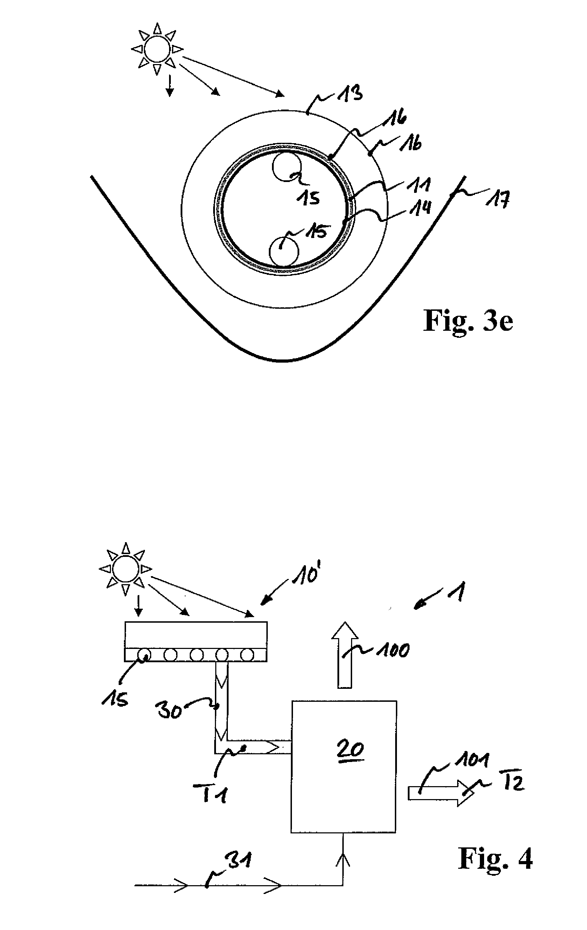

Fig. 3e zeigt eine weitere Ausführungsform des erfindungsgemäßen Kollektivkollektors 10 in einer seitlichen Schnittansicht. Der vorliegende nach dem Sydney-Prinzip arbeitende Kollektivkollektor 10 umfasst hierbei zwei konzentrisch zueinander angeordnete Glasröhren 16, zwischen denen das Umgebungsmedium evakuiert wurde. Innerhalb der inneren, das heißt der kleineren, Glasröhre 16 ist wenigstens eine im Querschnitt wenigstens teilweise kreisförmige Photovoltaikzelle 11 angeordnet, welche mit einer ebenfalls im Querschnitt kreisförmigen Lichtabsorberschicht 14 in Kontakt ist. Die Lichtabsorberschicht 14 ist hierbei ihrerseits mit jeweils zwei Rohrleitungen 15 in Kontakt, um die in der Lichtabsorberschicht 14 erzeugte thermische Wärme an das in den beiden Rohrleitungen 15 aufgenommene Fluid (vorliegend nicht bezeichnet) zu übertragen. Sowohl die wenigstens eine Photovoltaikzelle 11 als auch die Lichtabsorberschicht 14 der Solarthermievorrichtung 12 sind im Querschnitt zur Längserstreckung der dargestellten Glasröhren 16 wenigstens kreisförmig ausgeführt.

Die beiden von dem Kollektivkollektor 10 aufgenommenen Rohrleitungen 15 sind einander gegenüber auf einer vorliegend nicht weiter dargestellten Durchmesserlinie der kreisförmigen Lichtabsorberschicht 14 angeordnet. Die Anordnung erfolgt vorliegend derart, dass die beiden Rohrleitungen 15 auf der Spiegelsymmetrieebene des Reflexionselements 17, vorliegend als Parabolspiegel ausgeführt, umfasst werden. Der innerhalb der kleineren Glasröhre 16 umfasste Raum des Kollektivkollektors 10 ist zum besseren Wärmeübertrag zwischen den beiden Rohrleitungen 15 mit Luft gefüllt. Der Verlust an Wärme an die Umgebung durch die größere Glasröhre 16 wird durch das zwischen den beiden Glasröhren befindliche Vakuum verhindert.

Wie in den zuvor dargestellten Ausführungsformen des erfindungsgemäßen Kollektivkollektors 10 kann vorliegend die wenigstens eine Photovoltaikzelle 11 besonders bevorzugt als Beschichtung auf Siliziumbasis auf der Absorberschicht 14 ausgeführt sein. Zur Verringerung der Anzahl an Herstellungsschritten, kann die Beschichtung direkt auf die Lichtabsorberschicht 14 aufgebracht sein.

Fig. 4 zeigt eine schematische Darstellung einer solarbetriebenen Solar-Kälteeinheit gemäß dem Stande der Technik. Hierbei umfasst die Solar-Kälteeinheit 1 eine Kältemaschine 20, welche mit Wärme aus einem Solarkollektorsystem 10' versorgt wird. Weiterhin wird die dargestellte Kältemaschine 20 mit elektrischer Energie über die Stromzuleitung 31 versorgt. Die von der Kältemaschine 20 aufgenommene Wärme wird durch das Solarkollektorsystem 11' bereitgestellt, in welchem durch solare Einstrahlung sich ein in Rohrleitungen 15 befindliches Fluid erwärmt wird. Das in den Rohrleitungen 15 enthaltene Fluid wird über ein Fluidleitungssystem 30 zum Wärmeaustausch der Kältemaschine 20 zugeführt, welche beispielsweise as Adsorptions- oder Absorptionskältemaschine ausgeführt sein kann.

Bei einer Absorptionskältemaschine wird typischerweise ein Kältemittel in einem Lösungsmittelkreislauf bei geringerer Temperatur in einem zweiten Stoff absorbiert und bei höherer Temperatur wieder desorbiert. Bei dem Prozess wird die Temperaturabhängigkeit der physikalischen Löslichkeit dieser beiden Stoffe zur Erzeugung von Kälte genutzt. Voraussetzung hierfür ist jedoch dass die beiden Stoffe in einem vorbestimmten Temperaturintervall miteinander löslich sind. Vorliegend soll nicht weiter auf den Aufbau solcher aus dem Stand der Technik bekannten Kältemaschinen eingegangen werden.

Gemäß dem Funktionsprinzip der Kältemaschine wird der Kältemaschine 20 ein Fluid der Temperatur T1 zugeführt, welches zusammen mit dem durch die Stromzuleitung 31 zugeführten elektrischen Strom die für die Kältegewinnung notwendige Energie bereitstellt. Als Produkt wird einerseits eine Kälteabgabe 100 mittels eines kalten Fluids erzeugt, andererseits eine Wärmeabgabe 101 mittels eines warmen Fluids, welches eine Temperatur T2 aufweist. Hierbei ist die Temperatur T2 geringer als die Temperatur T1. Sowohl die Kälteabgabe 100 als auch die Wärmeabgabe 101 durch die Kältemaschine 20 erfolgt mittels geeigneter Fluide, welche jedoch nicht identisch sein müssen.

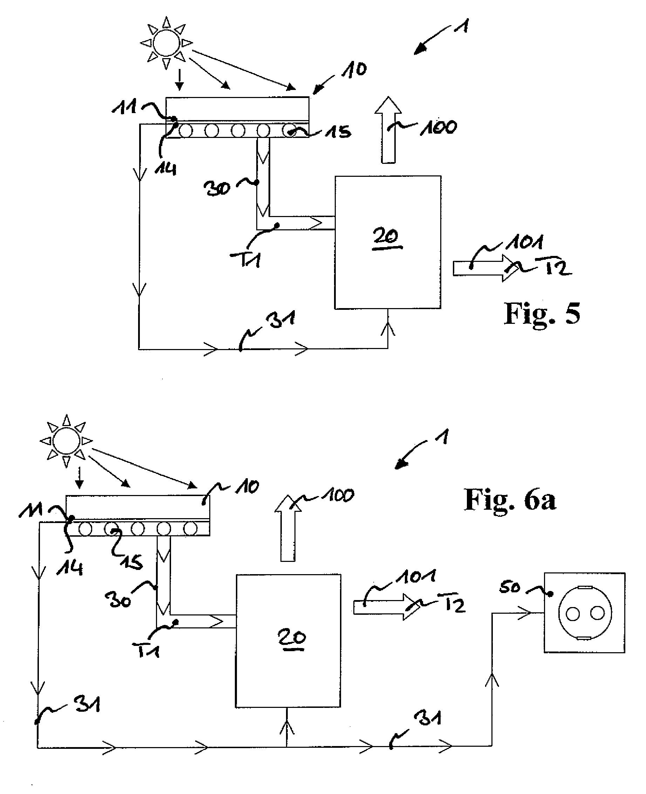

Fig. 5 zeigt eine schematische Darstellung einer ersten Ausführungsform der erfindungsgemäßen Kälteeinheit 1, welche sich im Vergleich zu der in Fig. 4 dargestellten Kälteeinheit dadurch unterscheidet, dass die Stromversorgung durch den Kollektivkollektor 10 mit elektrischer Energie gesichert wird. Die Stromversorgung deckt den Strombedarf der Kältemaschine 20 sowie den weiterer vorliegend nicht gezeigter Komponenten, insbesondere den einer Steuereinheit 40. Weiterhin wird die Kältemaschine 20 mittels der in dem Kollektivkollektor 10 erzeugten thermischen Wärme versorgt.

Hierbei sei darauf hingewiesen, dass in der vorliegenden wie den nachfolgenden Ausführungsbeispielen zwar stets ein Kollektivkollektor 10 umfasst ist, dieser aber auch durch ein allgemeineres Solarkollektorsystem 10', welches zur Erzeugung von elektrischem Strom wenigstens eine Photovoltaikzelle 11 und zur gleichzeitigen Erzeugung von Wärme eine Solarthermievorrichtung 12 aufweist, ersetzt sein kann.

Gemäß der vorliegenden Ausführungsform, ist die Solar-Kälteeinheit 1 unabhängig von einer externen Stromversorgung. Demgemäß kann die Bereitstellung der Kälteabgabe 100 sowie der Wärmeabgabe 101 auch dann noch erfolgen, wenn ein externes Stromversorgungsnetz 51 (nicht gezeigt) nicht für die Stromversorgung bereit steht. Ausführungsgemäß ist lediglich eine ausreichende solare Einstrahlung zur Erzeugung von elektrischer Energie sowie thermischer Wärme in dem Kollektivkollektor 10 vorausgesetzt. Aufgrund des durch die Kältemaschine 20 benötigten hohen Wärmeübertrags eignet sich eine Kombination einer Kältemaschine 20 mit dem vorab beschriebenen Kollektivkollektor 10 zur Verbindung als Einheit besonders gut. Damit können insbesondere in Gebieten mit einer ausreichenden Sonneneinstrahlung, jedoch mit einem nicht ausreichend entwickelten Stromversorgungsnetz die ausführungsgemäße Solar-Kälteeinheit 1 besonders bevorzugt eingesetzt werden. Die durch die Kältemaschine 20 bereitgestellte Kälteabgabe 100 kann zur Kühlung von Gebäuden oder auch zur Bereitstellung von Kälte bei industriellen Prozessen verwendet werden. Die Wärmeabgabe 101 kann weiterhin zur Brauchwasservorwärmung bzw. zur Erwärmung von Nutzwasser bis zu einer Temperatur von typischerweise 45°C benutzt werden.

Typische Anwendungen zur Kälteerzeugung bei einem Hotel mit angeschlossenem Schwimmbad bedürfen einer ungefähren Nutzfläche von 400 m² eines Kollektivkollektors 10 um etwa 140 KW an Warmwasser in dem Temperaturbereich zwischen 70°C und 95°C der Kältemaschine 20 zur Verfügung zu stellen. Gemäß der vorab beschriebenen Ausführungsform des Kollektivkollektors 10 vermag dieser etwa 25 KW an elektrischer Leistung zur Verfügung zu stellen, welche jedoch nur zu einem geringen Anteil, ca. 6 kW, von der Kältemaschine nachgefragt werden. Die von der Kältemaschine 20 aufgenommene thermische sowie elektrische Energie können beispielsweise umgesetzt werden in eine Kälteabgabe 101 von etwa 100 kW (im Bereich von 6°C bis 20°C) und in eine Wärmeabgabe 101 von typischerweise 240 kW (im Bereich bis zu 45°C). Voraussetzung hierfür ist eine ausreichende Sonnenstrahlung, wie sie in mittleren und niedrigen Breiten der Erde bei wolkenlosem Himmel tagsüber vorliegt.

Fig. 6a zeigt eine weitere Ausführungsform der erfindungsgemäßen Solar-Kälteeinheit 1, welche sich im Vergleich zur Ausführungsform gemäß Fig. 5 dadurch auszeichnet, dass die durch die wenigstens eine Photovoltaikzelle 11 des Kollektivkollektors 10 erzeugte elektrische Energie nicht nur der Kältemaschine 20 zu deren Betrieb zur Verfügung gestellt wird, sondern auch ein Überschuss an erzeugter elektrischer Energie über eine elektrische Schnittstelle 50 einem vorliegend nicht weiter gezeigten, externen Stromnetz 51 zur Verfügung gestellt wird. Durch eine vergütete Einspeisung an elektrischer Energie in das externe Stromnetz 51 kann folglich die Rentabilität des Betriebs der dargestellten Solar-Kälteeinheit 1 deutlich erhöht werden.

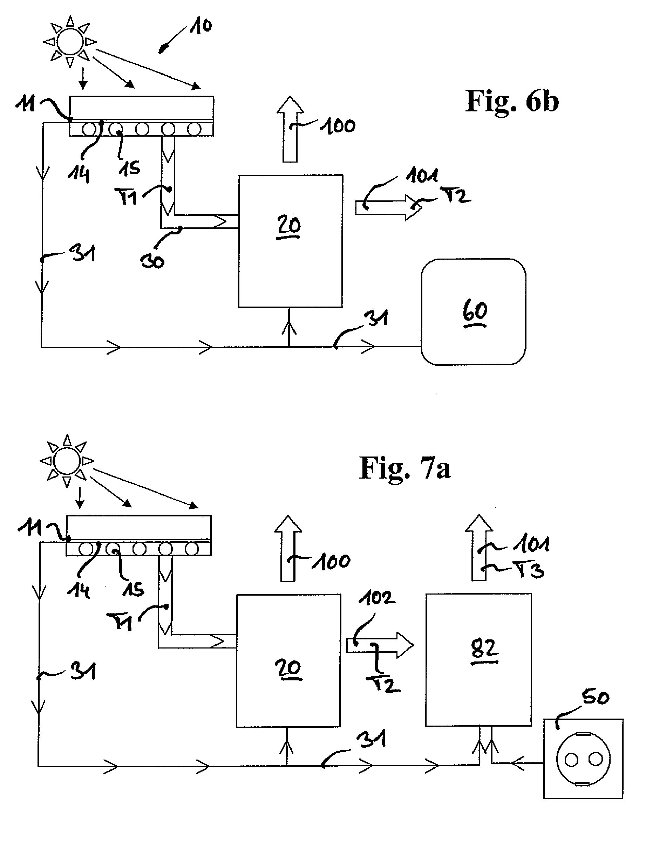

Fig. 6b zeigt eine schematische Darstellung einer alternativen Ausführungsform zu der in Fig. 6a dargestellten Ausführungsform der Solar-Kälteeinheit 1. Hierbei wird in der wenigstens einen Photovoltaikzelle 11 des Kollektivkollektors 10 erzeugte überschüssige Energie nicht einem externen Stromnetz zugeführt, sondern wird mittels einer Speichereinrichtung 60 in elektrischer bzw. chemischer Form gespeichert. Dementsprechend kann der von der Solar-Kälteeinheit 1 umfassten Kältemaschine 20 auch dann elektrische Energie zugeführt werden, wenn die solare Einstrahlung für die Darstellung eine ausreichende Menge an elektrischer Energie mit Hilfe des Kollektivkollektors 10 nicht ausreichend ist. Derartige Bedingungen sind etwa bei bewölktem Himmel bzw. bei Abend-, und Morgenzeiten denkbar. Alternativ kann die in der Speichereinrichtung 60 gespeicherte Energie auch von anderen Abnehmern genutzt werden.

Fig. 7a zeigt eine schematische Darstellung einer weiteren Ausführungsform der erfindungsgemäßen Solar-Kälteeinheit 1. Die Ausführungsform ist hierbei als eine teilweise Erweiterung der in Fig. 6a und 6b gezeigten Ausführungsformen dargestellt. In Erweiterung zu den dort gezeigten Solar-Kälteeinheiten 1 umfasst die vorliegende Ausführungsform zusätzlich eine Hochtemperatur-Wärmepumpe 82, welche dazu ausgebildet ist, die Wärmeabgabe 101 der in den Fig. 6a und 6b gezeigten Kältemaschine 20 als Wärmetransfer 102 an die Hochtemperatur-Wärmepumpe 82 zu übertragen. Zusätzlich zu diesem Wärmetransfer 102, welcher durch einen Fluss eines Fluids mit der Temperatur T2 definiert ist, bedarf die Hochtemperatur-Wärmepumpe 82 auch einer Versorgung mit elektrischer Energie, welche vorzugsweise durch die bei genügender Sonneneinstrahlung mittels dem Kollektivkollektor 10 erzeugte elektrische Energie gedeckt werden kann. Bei nicht ausreichender Sonneneinstrahlung kann zudem noch eine elektrische Energieversorgung aus einem vorliegend nicht weiter gezeigten externen elektrischen Stromnetz 51 gedeckt werden. In der Darstellung gemäß Fig. 7a ist das externe Stromnetz 51 durch eine Schnittstelle 50 symbolisiert.

Die Hochtemperatur-Wärmepumpe 82 erlaubt, das von der Kältemaschine 20 abgegebene Fluid der Temperatur T2 kalorisch aufzubereiten und eine Wärmeabgabe 101 zu erzeugen, welche durch einen Fluss eines Fluids der Temperatur T3 dargestellt ist. Das von der Hochtemperatur-Wärmepumpe 82 abgegebene Fluid kann hierbei mit dem von der Kältemaschine 20 aufgenommenen Fluid der Temperatur T2 identisch oder auch verschieden sein. In jedem Fall ist jedoch die Temperatur T3 größer als die Temperatur T2. Folglich steht dem Verbraucher im Vergleich zu den Ausfürhungsformen der Solar-Kälteeinheit 1 gemäß Fig. 6a und Fig. 6b eine Wärmeabgabe 101 höheren Wärmeinhalts bzw. höherer Temperatur zur Verfügung. Dies ist insbesondere für industrielle Prozesse als auch für die Warmwasseraufbereitung von Vorteil, da hierfür die von der Kältemaschine 20 bereitgestellte Wärmeabgabe des Temperaturniveaus T2 meistens nicht ausreichend ist. In einer typischen Ausführungsform beträgt die von der Kältemaschine 20 abgegebene und durch die Hochtemperatur-Wärmepumpe 82 aufgenommene Wärmeleistung etwa 240 kW, und korrespondiert mit einem Fluss eines Fluids einer Temperatur T2 von etwa 42 °C. Das von der Hochtemperatur-Wärmepumpe 82 abgegebene Fluid weist etwa eine Temperatur von 60°C bis 100°C und eine Wärmeleistung von 300kW auf. Hierbei nimmt die Hochtemperatur-Wärmepumpe 82 etwa zusätzlich 72 kW an elektrischer Leistung auf, welche zu etwa 16 kW durch den Kollektivkollektor 10 und zum Rest aus dem externen elektrischen Stromnetz 10 gedeckt wird.

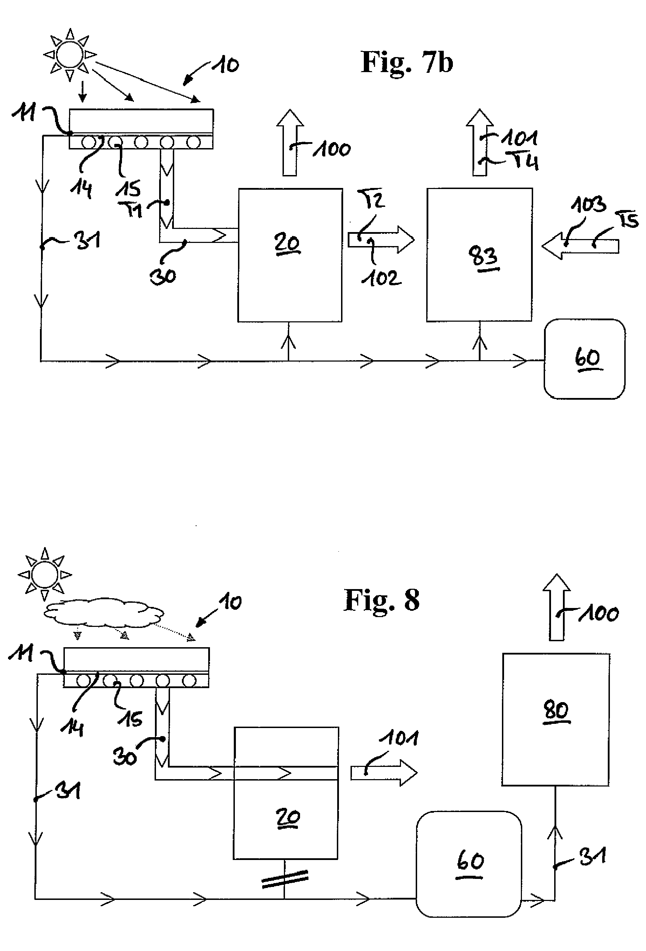

Fig. 7b zeigt eine Schemadarstellung einer weiteren Ausführungsform der erfindungsgemäßen Solar-Kälteeinheit 1. Die vorliegende Ausführungsform unterscheidet sich von der in Fig. 7a gezeigten Ausführungsform lediglich dadurch, dass anstelle einer Hochtemperatur-Wärmepumpe 82 eine Adsorptions-/Absorptions-Wärmepumpe 83 verwendet wird, um die in den Figen. 6a und 6b dargestellte Wärmeabgabe 102 der Kältemaschine 20, welche durch einen Fluss eines Fluids der Temperatur T2 dargestellt ist, aufzubereiten, um eine Wärmeabgabe 101 zu erzeugen, welche durch einen Fluss eines Fluids der Temperatur T4 dargestellt wird. Hierbei kann das von der Adsorptions-/Absorptions-Wärmepumpe 83 abgegebene Fluid wieder mit dem Fluid übereinstimmen, welches seinerseits von der Kältemaschine 20 abgegeben wird. Anders als die Ausführungsform gemäß Fig 7a benötigt die vorliegende Ausführungsform jedoch zum Betrieb eine relativ geringere Zufuhr von elektrischer Energie, welche bei gewöhnlicher Sonneneinstrahlung ohne weiteres durch die elektrische Energie gedeckt werden kann, die durch das Solarkollektrosystem 10' oder den Kollektivkollektor 10 erzeugt wird. Im Normalfall ist die elektrische Energieerzeugung sogar ausreichend, um einen nicht von der Solar-Kälteeinheit 1 verbrauchten Anteil elektrischer Energie mit Hilfe einer Speichereinrichtung 60 zu speichern. Zusätzlich bedarf die vorliegende Adsorptions-/Absorptions-Wärmepumpe 83 auch noch einer Wärmeaufnahme 103, welche etwa durch einen Fluss eines Fluids der Temperatur T5 von mitunter mehr als 100 °C dargestellte wird. Das Fluid bzw. die Wärme kann hierbei etwa aus einem Abwärmesystem, einem Dampfsystem oder einer Heißwasserversorgung entnommen werden. Zusätzlich ist auch noch die direkte Befeuerung der Adsorptions-/Absorptions-Wärmepumpe 83 durch das Verbrennen von fossilen Brennstoffen möglich. Die Wärmeabgabe 101 der Adsorptions-/Absorptions-Wärmepumpe 83 erfolgt durch den Ausfluss eines Fluids der Temperatur T4, welche etwa zwischen 50 °C und 60°C beträgt. In einer typischen Ausführungsform der vorliegenden Solar-Kälteeinheit 1 nimmt die Adsorptions-/Absorptions-Wärmepumpe 83 einen Wärmetransfer 102 einer Wärmeleistung von 240 kW eines Fluids einer Temperatur T2 von ca. 45 °C auf. Zusätzlich findet eine Wärmeaufnahme 103 aus einer externen Quelle von etwa 200 kW statt. Die zusätzlich aufgenommene elektrische Versorgungsleistung der Adsorptions-/Absorptions-Wärmepumpe 83 beträgt etwa 10 kW, wobei noch etwa 6 kW der durch das Solarkollektrosystem 10' oder den Kollektivkollektor 10 erzeugten elektrischen Energie in der Speichereinrichtung 20 gespeichert wird. Die Wärmeabgabe 101 der Adsorptions-/Absorptions-Wärmepumpe 83 beträgt etwa 440 kW und korrespondiert mit dem Fluss eines Fluids der Temperatur T4, welche etwa 50 °C bis 60 °C beträgt.

Fig. 8 zeigt eine schematische Darstellung einer weiteren Ausführungsform der erfindungsgemäßen Solar-Kälteeinheit 1, welche im Vergleich zu der in Fig. 6b dargestellten Solar-Kälteeinheit 1 weiter eine Kompressionskältemaschine 80 aufweist. Die dargestellte Kompressionskältemaschine 80 ist der Speichereinrichtung 60 zur Speicherung von überschüssig erzeugter elektrischer Energie des Kollektivkollektors 10 nachgeschaltet. Erfolgt etwa bei Bewölkung eine für die Versorgung der Kältemaschine 20 nicht ausreichende elektrische Energieerzeugung durch den Kollektivkollektor 10 kann durch die ausführungsgemäße Solar-Kälteeinheit 1 dennoch weiterhin eine Kälteabgabe 100 zur Verfügung gestellt werden, welche durch die Kompressionskältemaschine 80 erzeugt wird. Die Stromzufuhr an die Kältemaschine 20 kann hierzu unterbrochen werden. Der von dem Kollektivkollektor 10 an die Kältemaschine 20 abgegebene thermische Energiefluss, welcher sich bei nicht ausreichender Sonneneinstrahlung durch ein geringeres Temperaturniveau als das bei guter Sonneinstrahlung erreichte Temperaturniveau T1 auszeichnet, wird an den Verbraucher abgegeben.

Zum autarken Betrieb der vorliegend dargestellten Solar-Kälteeinheit 1 kann die Speichereinrichtung 60 ein Batterieelement umfassen. Alternativ oder auch zusätzlich kann die Speichereinrichtung 60 überschüssig erzeugten Strom durch eine geeignete Aufspaltungseinrichtung 61 (vorliegende nicht gezeigt) in Wasserstoff und Sauerstoff aufspalten und wenigstens den dargestellten Wasserstoff in einem Vorratsbehältnis 62 (vorliegend nicht gezeigt) bevorraten. Sollten die Lichteinflüsse es erfordern, kann bei Bedarf entweder aus dem wenigstens einen Batterieelement direkt elektrische Energie entnommen oder mithilfe einer Brennstoffzelle 63 (vorliegend nicht gezeigt) mithilfe des in dem Vorratsbehältnis 62 bevorrateten Wasserstoffs elektrische Energie erzeugt und der Kompressionskältemaschine 80 zum Betrieb zur Verfügung gestellt werden. Je nach Leistungsklasse und Baugröße kann die von der Solar-Kälteeinheit 1 umfasste Speichereinrichtung 60 auch von einer vorliegend nicht weiter gezeigten transportablen Anordnungsvorrichtung 70 umfasst sein.

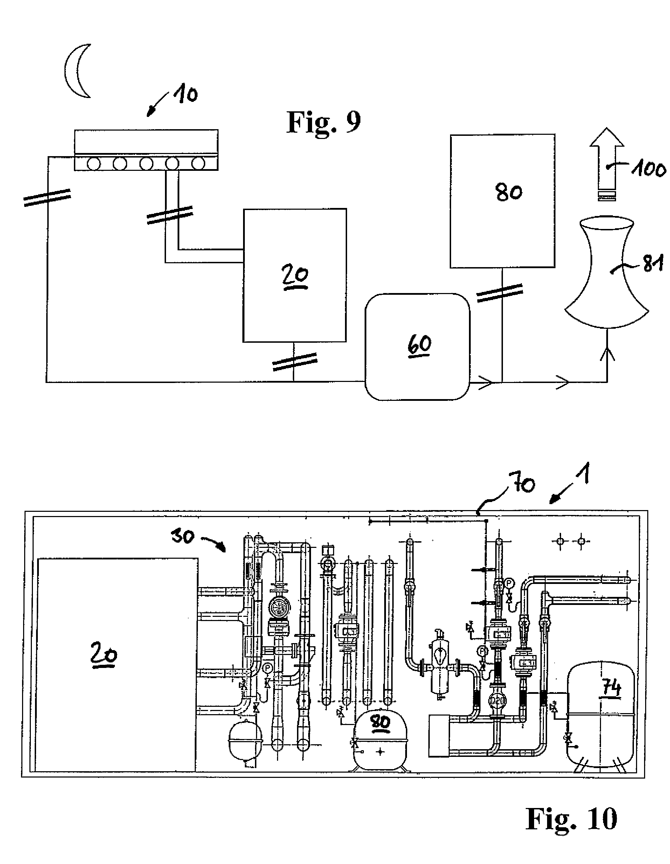

Fig. 9 zeigt eine weitere Ausführungsform der erfindungsgemäßen Solar-Kälteeinheit 1, welche unter Abwesenheit von Sonneneinstrahlung, etwa zur Nachtzeit, betrieben wird. In dem in Fig. 9 dargestellten Funktionsstatus, wird die in der Speichereinrichtung 60 gespeicherte tagsüber überschüssig erzeugte, elektrische Energie abgerufen und einem oder einer Vielzahl von Kühltürmen 81 zugeführt. Hierbei wird durch einen Verdunstungseffekt eine geeignete Kälteabgabe 100 bereitgestellt, welche entsprechend abgeführt werden kann. Die elektrische Energieaufnahme durch den wenigstens einen Kühlturm 81 dient hierbei hauptsächlich dem Betrieb von Pumpen bzw. Verdunstungsvorrichtungen, wie etwa Ventilatoren.

Unter Verwendung einer vorliegend nicht weiter gezeigten geeigneten Steuereinheit 40 kann zwischen den unterschiedlichen Komponenten der Solar-Kälteeinheit 1 zur Erzeugung einer Kälteabgabe 100 gemäß unterschiedlichen Lichteinstrahlungsintensitäten gewechselt werden, wodurch die Gesamtanzahl der möglichen Betriebsstunden einer ausführungsgemäßen Solar-Kälteeinheit 1 deutlich im Vergleich zu aus dem Stande der Technik bekannten Solar-Kälteeinheiten 1, wie etwa in Fig. 4 dargestellt, erhöht wird.

Fig. 10 zeigt eine weitere Ausführungsform der erfindungsgemäßen Solar-Kälteeinheit 1 in einer Schnittansicht von der Seite. Die ausführungsgemäße Solar-Kälteeinheit 1 ist hierbei von einer transportablen Anordnungsvorrichtung 70 aufgenommen, welche als Container bzw. Schiffscontainer ausgeführt ist. Alle Komponenten der Solar-Kälteeinheit 1, welche der solaren Einstrahlung zum Betrieb nicht bedürfen, können in der transportablen Anordnungsvorrichtung 70 aufgenommen sein. Insbesondere ist eine Kältemaschine 20 aufgenommen, welche über ein Fluidleitungssystem 30 durch ein vorliegend nicht dargestelltes Solarkollektorsystem 10' bzw. einen vorliegend nicht weiter dargestellten Kollektivkollektor 10 mit Wärmeenergie versorgt wird. Ferner umfasst die vorliegende dargestellte Ausführungsform als weitere Komponente eine Kompressionskältemaschine 80 sowie ein Ausdehnungsgefäß 74, dessen Funktion nicht im Einzelnen ausgeführt werden soll.

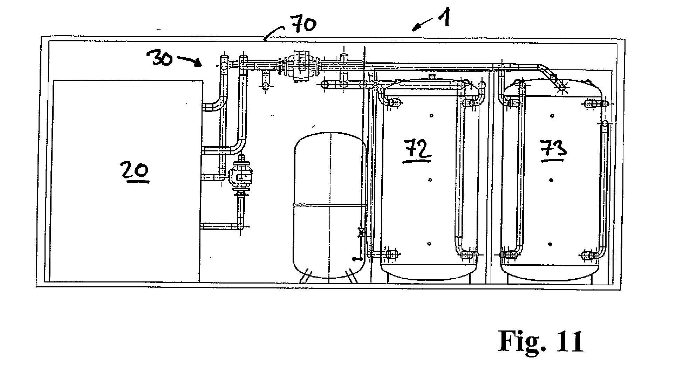

Fig. 11 zeigt eine seitliche Schnittansicht der in Fig. 10 dargestellten Ausführungsform der erfindungsgemäßen Solar-Kälteeinheit 1, jedoch im Vergleich zu Fig. 10 in einem in Bezug zur Längserstreckung der transportablen Anordnungsvorrichtung 70 seitlich versetzten Schnitt. Die dargestellte Solar-Kälteeinheit 1 umfasst zudem noch einen Kältespeicher 72 sowie einen Wärmespeicher 73, welche zur Aufnahme der von der Kältemaschine 20 abgegebenen Kälte (Kälteabgabe 100) sowie Wärme (Wärmeabgabe 101) vorgesehen sind. Demgemäß kann die durch die Kältemaschine 20 bereit gestellte thermische Energie (negative wie positive) zwischengespeichert und auf Anfrage entsprechend abgerufen werden.

An dieser Stelle sei auch darauf hingewiesen, dass alle oben beschriebenen Teile für sich alleine gesehen und in jeder Kombination, insbesondere die in den Zeichnungen dargestellten Details als erfindungswesentlich beansprucht werden. Abänderungen hiervon sind dem Fachmann geläufig.

### Bezugszeichen:

- 1: Solar-Kälteeinheit

- 10: Kollektivkollektor
- 10': Solarkollektorsystem
- 11: Photovoltaikzelle
- 12: Solarthermievorrichtung
- 13: Lichteintrittsscheibe
- 14: Lichtabsorberschicht
- 15: Rohrleitung
- 16: Glasröhre
- 17: Reflexionselement
- 18: Begrenzungselement
- 19: Luftraum

- 20: Kältemaschine

- 30: Fluidleitungssystem
- 31: Stromzuleitung

- 40: Steuereinheit
- 41: Schnittstelle
- 42: externes Netzwerk

- 50: Schnittstelle
- 51: externes Stromnetz

- 60: Speichereinrichtung
- 61: Aufspaltungseinrichtung
- 62: Vorratsbehältnis
- 63: Brennstoffzelle

- 70: transportable Anordnungsvorrichtung
- 71: mechanisches Mittel

- 72: Kältespeicher
- 73: Wärmespeicher
- 74: Ausdehnungsgefäß

- 80: Kompressionskältemaschine
- 81: Kühlturm
- 82: Hochtemperatur-Wärmepumpe
- 83: Absorptions/Adsoprtions-Wärmepumpe

- 90: Isoliermittel

- 100: Kälteabgabe
- 101: Wärmeabgabe
- 102: Wärmetransfer
- 103: Wärmeaufnahme

- F1: erste Fläche
- F2: zweite Fläche
- T1: erste Temperatur
- T2: zweite Temperatur
- T3: dritte Temperatur
- T4: vierte Temperatur
- T5: fünfte Temperatur

## Patentansprüche

1. Kollektivkollektor (10) zur gleichzeitigen Erzeugung von elektrischem Strom und thermischer Wärme umfassend:
- eine Lichteintrittsscheibe (13), welche in einem Betriebszustand von Sonnenlicht durchstahlt wird und den Kollektivkollektor (10) in einem Betriebszustand wenigstens zu einer sonnenzugewandten Seite hin begrenzt;
- wenigstens eine in einer ersten Fläche (F1) angeordneten Photovoltaikzelle (11);
- wenigstens eine in einer zweiten Fläche (F2) angeordneten Lichtabsorberschicht (14);
- wenigstens eine mit einem Fluid gefüllte Rohrleitung (15);
wobei die erste Fläche (F1) in einem Betriebszustand des Kollektivkollektors (10) einer sonnenzugewandten Seite zugewandt ist, die erste und die zweite Fläche (F1 und F2) in vollflächigem Kontakt miteinander angeordnet sind, und die wenigstens eine Photovoltaikzelle (11) einen Durchlass von durch die Lichteintrittsscheibe (13) gestrahltem Sonnenlicht in Einfallsrichtung auf die zweite Fläche (F2) erlaubt, und wobei ferner die zweite Fläche (F2) mit der wenigstens einen Rohrleitung (15) in thermischem Kontakt ist, so dass bei einem absorbtionsbedingten Erwärmen der Lichtabsorberschicht (14) das Fluid in der Rohrleitung (15) einen Wärmeübertrag erfährt.

2. Kollektivkollektor zur gleichzeitigen Erzeugung von elektrischem Strom und thermischer Wärme nach Anspruch 1,
**dadurch gekennzeichnet, dass**
der Kollektivkollektor (10) auf wenigstens einer in einem Betriebszustand sonnenabgewandten Seite, insbesondere auch auf Seiten, welche in einem Betriebszustand die wenigstens eine Photozelle (11) sowie die Lichtabsorptionsschicht (14) seitlich begrenzen, eine oder mehrere Lagen an Isoliermittel (90), vorzugsweise eine oder mehrere Lagen an Mineralwolle, aufweist.

3. Kollektivkollektor zur gleichzeitigen Erzeugung von elektrischem Strom und thermischen Wärme nach einem der vorhergehenden Ansprüche,
**dadurch gekennzeichnet, dass**
die Lichteintrittsscheibe (13) von einer Glasröhre (16) umfasst wird, in welcher die wenigstens eine Photovoltaikzelle (11), die wenigstens eine Lichtabsorberschicht (14) und die wenigstens eine mit einem Fluid gefüllte Rohrleitung (15) angeordnet sind.

4. Kollektivkollektor zur gleichzeitigen Erzeugung von elektrischem Strom und thermischer Wärme nach Anspruch 3,
**dadurch gekennzeichnet, dass**
in einem Betriebszustand wenigstens ein vorbestimmter innerer Teilbereich der Glasröhre (16) evakuiert ist.

5. Kollektivkollektor zur gleichzeitigen Erzeugen von elektrischem Strom und thermischer Wärme nach einem der Ansprüche 3 oder 4,
**dadurch gekennzeichnet, dass**
die erste und zweite Fläche (F1 und F2) in einem Querschnitt senkrecht zur Längserstreckung der Glasröhre (16) als geschlossene, insbesondere ellipsoidartige Kurven dargestellt sind, wobei der Querschnitt wenigstens einer mit einem Fluid gefüllten Rohrleitung (15) innerhalb der beiden geschlossenen Kurven angeordnet ist.

6. Kollektivkollektor zur gleichzeitigen Erzeugung von elektrischem Strom und thermischer Wärme nach einem der vorhergehenden Ansprüche,
**dadurch gekennzeichnet, dass**
der Kollektivkollektor (10) weiterhin wenigstens ein Reflexionselement (17), insbesondere wenigstens ein parabolförmiges Reflexionselement (17) aufweist, welches eine Bündelung von auf die wenigstens eine Photovoltaikzelle (11) und/oder wenigstens eine Lichtabsorberschicht (14) auftreffendem Sonnenlicht bewirkt.

7. Solar-Kälteeinheit (1), welche wenigstens folgende Komponenten umfasst:
- wenigstens ein Solarkollektorsystem (10'), welches zur Erzeugung von elektrischem Strom wenigstens eine Photovoltaikzelle (11) und zur gleichzeitigen Erzeugung von Wärme eine Solarthermievorrichtung (12) aufweist, insbesondere wenigstens einen Kollektivkollektor (10) gemäß einem der vorgehenden Ansprüche vorsieht;
- wenigstens eine Kältemaschine (20), die als Adsorptions- und/oder Absorptionskältemaschine ausgeführt ist, und welche über ein Fluidleitungssystem (30) mit der Solarthermievorrichtung (12) in fluidtechnischem Kontakt steht;
- eine elektrische Steuereinheit (40) zur elektrischen und/oder zur fluidtechnischen Regelung regelungsbedürftiger Komponenten der Solar-Kälteeinheit (1);
wobei die elektrische Energie zum Betrieb der Steuereinheit (40) und der Kältemaschine (20) entweder in direkter oder in indirekter Form durch die wenigstens eine Photovoltaikzelle (11) bereitgestellt wird und die Solar-Kälteeinheit (1) folglich autark von einer externen Stromversorgung ist.

8. Solar-Kälteeinheit nach Anspruch 7,
**dadurch gekennzeichnet, dass**
die Solar-Kälteeinheit (1) wenigstens eine transportable Anordnungsvorrichtung (70), welche insbesondere als Container oder Schiffscontainer ausgeführt ist, zur Anordnung von Komponenten der Solar-Kälteeinheit (1), welche zum Betrieb nicht dem Sonnenlicht ausgesetzt werden müssen, aufweist.

9. Solar-Kälteeinheit (1), welche wenigstens folgende Komponenten umfasst:
- wenigstens ein Solarkollektorsystem (10'), welches zur Erzeugung von elektrischem Strom wenigstens eine Photovoltaikzelle (11) und zur gleichzeitigen Erzeugung von Wärme eine Solarthermievorrichtung (12) aufweist, insbesondere wenigstens einen Kollektivkollektor (10) gemäß einem der Ansprüche 1 bis 6 vorsieht;
- wenigstens eine Kältemaschine (20), die als Adsorptions- und/oder Absorptionskältemaschine ausgeführt ist, und welche über ein Fluidleitungssystem (30) mit der Solarthermievorrichtung (12) in fluidtechnischem Kontakt steht;
- eine elektrische Steuereinheit (40) zur elektrischen und/oder zur fluidtechnischen Regelung regelungsbedürftiger Komponenten der Solar-Kälteeinheit (1);
wobei die Solar-Kälteeinheit (1) weiter wenigstens eine transportable Anordnungsvorrichtung (70) aufweist, welche als Container oder Schiffscontainer ausgeführt ist, und in welcher die Komponenten der Solar-Kälteeinheit (1), welche zum Betrieb nicht dem Sonnenlicht ausgesetzt werden müssen, angeordnet sind.

10. Solar-Kälteeinheit nach einem der Ansprüche 7 bis 9,
**dadurch gekennzeichnet, dass**
die Solar-Kälteeinheit (1) weiter eine elektrische Schnittstelle (50) zu einem externen Stromnetz (51) aufweist, um die durch das wenigstens eine Solarkollektorsystem (10') erzeugte und von der Solar-Kälteeinheit (1) nicht benötigte Menge an elektrischer Energie, in das externe Stromnetz (51) einzuspeisen.

11. Solar-Kälteeinheit nach einem der Ansprüche 7 bis 9,
**dadurch gekennzeichnet, dass**
die Solar-Kälteeinheit (1) eine Speichereinrichtung (60) als weitere Komponente aufweist, um die durch das wenigstens eine Solarkollektorsystem (10') erzeugte und von der Solar-Kälteeinheit (1) nicht benötigte Menge an elektrischer Energie, in elektrischer oder chemischer Form zu speichern, so dass sie zu einem späteren Zeitpunkt in elektrischer Form wieder der Solar-Kälteeinheit (1) zur Verfügung gestellte werden kann.

12. Solar-Kälteeinheit nach Anspruch 11,
**dadurch gekennzeichnet, dass**
die Speichereinrichtung (60) wenigstens ein Batterieelement umfasst.

13. Solar-Kälteeinheit nach einem der Ansprüche 11 oder 12,
**dadurch gekennzeichnet, dass**
die Speichereinrichtung (60) eine Aufspaltungseinrichtung (61) zur Aufspaltung von Wasser in Wasserstoff und Sauerstoff, sowie wenigstens ein Vorratsbehältnis (62) zur Bevorratung von Wasserstoff und eine Brennstoffzelle (63) zur Stromerzeugung mit Hilfe des in dem Vorratsbehältnis (62) bevorrateten Wasserstoffs umfasst.

14. Solar-Kälteeinheit nach einem der Ansprüche 7 bis 13,
**dadurch gekennzeichnet, dass**
die Kältemaschine (20) so ausgeführt ist, dass sie ein in dem wenigstens einen Solarkollektorsystem (10') auf eine erste Temperatur (T1) erwärmtes Fluid über das Fluidleitungssystem (30) als Eingangsfluid zum Betrieb aufnimmt, und als Ausgangsfluid das Fluid oder ein anderes Fluid mit einer zweiten im Vergleich zur ersten Temperatur (T1) niedrigeren Temperatur (T2) ausgibt, wobei insbesondere die erste Temperatur (T1) zwischen 50 °C und 150 °C, und insbesondere zwischen 70 °C und 95 °C liegt, und die zweite Temperatur (T2) zwischen 20 °C und 50 °C, insbesondere zwischen 40 °C und 45 °C liegt.

15. Solar-Kälteeinheit nach einem der Ansprüche 7 bis 14,
**dadurch gekennzeichnet, dass**
die Solar-Kälteeinheit (1) weiterhin eine Hochtemperatur-Wärmepumpe (82) oder eine Adsorptions-/Absorptions-Wärmepumpe (83) aufweist, die von der Kältemaschine (20) abgegebene Wärme als Wärmetransfer (103) zum Betrieb aufnimmt und wenigstens teilweise mit durch das wenigstens eine Solarkollektorsystem (10') bereitgestellter elektrischer Energie oder mit externer Energie versorgt wird, um eine Wärmeabgabe (101) bereitzustellen, welche einen größeren Wärmeinhalt aufweist als der abgegebene Wärmetransfer (103) der Kältemaschine (20).

16. Solar-Kälteeinheit nach einem der Ansprüche 7 bis 15,
**dadurch gekennzeichnet, dass**
die Solar-Kälteeinheit (1) weiterhin eine Kompressionskältemaschine (80) aufweist, die insbesondere zum Betrieb mittels der durch das wenigstens eine Solarkollektorsystem (10') in direkter oder in indirekter Form bereitgestellten Energie vorgesehen ist.

17. Solar-Kälteeinheit nach einem der Ansprüche 7 bis 16,
**dadurch gekennzeichnet, dass**
die elektrische Steuereinheit (40) über wenigstens eine Schnittstelle (41) über ein externes Netzwerk (42), insbesondere über das Internet, bedient werden kann.

18. Verfahren zur gleichzeitigen Bereitstellung von Wärme, Kälte und Strom mittels einer Solar-Kälteeinheit, insbesondere mittels einer Solar-Kälteeinheit (1) gemäß den Ansprüchen 7 bis 17, welches folgende Schritte umfasst:
- gleichzeitiges Erzeugen von Wärme und Strom mittels wenigstens eines Solarkollektorsystems (10'), welches zur Erzeugung von elektrischem Strom wenigstens eine Photovoltaikzelle (11) vorsieht und welches zur Erzeugung von Wärme eine Solarthermievorrichtung (12) vorsieht, insbesondere mittels wenigstens eines Kollektivkollektors (10) gemäß einem der Ansprüche 1 bis 6;
- Erzeugen von Kälte mittels einer Kältemaschine (20), die als Adsorptions-und/oder Absorptionskältemaschine ausgeführt ist, und welche über ein Fluidleitungssystem (30) mit der Solarthermievorrichtung (12) des Solarkollektorsystems (10') in fluidtechnischem Kontakt steht;
wobei die elektrische Energie zum Betrieb der Kältemaschine (20) entweder in direkter oder in indirekter Form durch die wenigstens eine Photovoltaikzelle (11) des wenigstens einen Solarkollektorsystems (10') bereitgestellt wird und die Solar-Kälteeinheit (1) folglich autark von einer externen Stromversorgung ist.
